(19)

Europäisches
Patentamt

European
Patent Office

Office européen
des brevets

(11) **EP 2 518 919 A2**

(12) **EUROPEAN PATENT APPLICATION**
published in accordance with Art. 153(4) EPC

(43) Date of publication:
**31.10.2012 Bulletin 2012/44**

(21) Application number: **10839779.5**

(22) Date of filing: **22.12.2010**

(51) Int Cl.:
***H04J 11/00*** *(2006.01)*  ***H04B 7/04*** *(2006.01)*

(86) International application number:
**PCT/KR2010/009214**

(87) International publication number:
**WO 2011/078582 (30.06.2011 Gazette 2011/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2009 US 288849 P**

(71) Applicant: **LG Electronics Inc.
Seoul 150-721 (KR)**

(72) Inventors:
• **CHUNG, Jae Hoon
Anyang-si
Gyeonggi-do 431-080 (KR)**

• **MOON, Sung Ho
Anyang-si
Gyeonggi-do 431-080 (KR)**
• **KIM, So Yeon
Anyang-si
Gyeonggi-do 431-080 (KR)**

(74) Representative: **Katérle, Axel et al
Wuesthoff & Wuesthoff
Patent- und Rechtsanwälte
Schweigerstraße 2
D-81541 München (DE)**

(54) **METHOD AND APPARATUS FOR EFFICIENTLY MEASURING A CHANNEL IN A MULTI-CARRIER WIRELESS COMMUNICATION SYSTEM**

(57) The present invention relates to a wireless communication system, and more particularly, to a method and an apparatus for efficiently measuring a channel in a multi-carrier wireless communication system. According to one embodiment of the present invention, a method in which a downlink receiving entity provides downlink channel measurement information for establishing component carriers in a multi-carrier wireless system, comprise the following steps: receiving, from a downlink transmitting entity, information on one or more downlink component carriers for which channel measurement for establishing CCs is to be performed; performing downlink channel measurement for one or more DL CCs; and reporting the result of the downlink channel measurement to the downlink transmitting entity, wherein said one or more downlink component carriers for which channel measurement is to be performed may contain a component carrier which is not allocated to the downlink receiving entity.

FIG. 26

EP 2 518 919 A2

**Description**

## TECHNICAL FIELD

The present invention relates to a wireless communication system, and more particularly, to a method and apparatus for efficiently measuring a channel in a multi-carrier supporting wireless communication system.

## BACKGROUND ART

MIMO (multiple-input multiple-output) technology means a method of improving transceived data efficiency by adopting multiple transmitting antennas and multiple receiving antennas instead of using a single transmitting antenna and a single receiving antenna. In particular, the MIMO technology is the technology for increasing capacity or improving performance in a transmitting or receiving end of a wireless communication system using multiple antennas. And, the MIMO technology may be called a multi-antenna technology. In order to correctly perform multi-antenna transmission, a transmitting end needs to receive a feedback of a channel measurement information measured by a receiving end, which receives a multi-antenna channel, from the receiving end.

Meanwhile, although uplink and downlink are configured with a single carrier in a related art wireless communication system, there is ongoing discussion on introduction of carrier aggregation or multi-carrier technology of binding a plurality of carriers to use in order to support an extended bandwidth.

## DISCLOSURE OF THE INVENTION

## TECHNICAL TASK

As the multi-carrier technology is introduced, it is necessary to newly define a channel measurement scheme and a measured channel information feedback scheme. In particular, in order to correctly perform carrier configuration in a multi-carrier supporting system, channel measurement is requested. Yet, a detailed method of determining a range of a carrier for channel measurement and performing the channel measurement has not been provided.

An object of the present invention is to provide a method and apparatus for channel measurement and feedback required for carrier configuration in a multi-carrier supporting system.

A technical task of the present invention is to reduce a delay time in a manner of performing a random access process in consideration of channel qualities of UL CCs in using carrier aggregation.

## TECHNICAL SOLUTION

To achieve these and other advantages and in accordance with the purpose of the present invention, as embodied and broadly described, a method of providing a downlink channel measurement information, which is provided for a component carrier setup by a downlink receiving entity in a multi-carrier supporting wireless communication system, according to one embodiment of the present invention may include the steps of receiving an information on at least one downlink component carrier, on which a channel measurement for the component carrier setup will be performed, from a downlink transmitting entity, performing a downlink channel measurement on the at least one downlink component carrier, and reporting a result of the downlink channel measurement to the downlink transmitting entity, wherein the at least one downlink component carrier, on which the channel measurement will be performed, includes a component carrier not assigned to the downlink receiving entity.

Preferably, the at least one downlink component carrier, on which the channel measurement for the component carrier setup will be performed, may include all or some of downlink component carriers configured by a cell, all or some of downlink component carriers set up for the downlink receiving entity, or all or some of a downlink measurement component carrier set.

Preferably, the at least one downlink component carrier, on which the channel measurement for the component carrier setup will be performed, may not include a downlink primary component carrier (CC).

Preferably, the downlink channel measurement may include at least one of a periodic reporting type $2^{nd}$ layer (L2) channel channel measurement according to a reporting period defined for a L2 measurement for the component carrier setup and an aperiodic reporting type L2 channel measurement and include at least one of a wideband channel measurement and a subband channel measurement on the component carrier as a channel measurement target for the component carrier setup.

Preferably, the downlink channel measurement may include at least one of a periodic reporting type $3^{rd}$ layer (L3) channel measurement according to a reporting period defined for a L3 channel measurement for the component carrier setup and an aperiodic reporting type L3 channel measurement.

Preferably, the method may further include the steps of receiving an indication of a setup for a downlink component carrier determined based on the reported result of the downlink channel measurement from the downlink transmitting entity and performing activation or deactivation of the downlink component carrier based on the indication.

To further achieve these and other advantages and in accordance with the purpose of the present invention, a method of transmitting a sounding reference signal, which is transmitted for a component carrier setup by an uplink transmitting entity in a multi-carrier supporting wireless communication system, according to another embodiment of the present invention may include the steps of receiving an information on at least one uplink component carrier, on which a channel measurement for the component carrier setup will be performed, from an uplink receiving entity, and transmitting the sounding reference signal on the at least one uplink component carrier to the uplink receiving entity, wherein the at least one uplink component carrier, on which the channel measurement will be performed, includes a component carrier not assigned to the uplink transmitting entity.

Preferably, the at least one uplink component carrier, on which the channel measurement for the component carrier setup will be performed, may include all or some of uplink component carriers configured by a cell, all or some of uplink component carriers set up for the uplink transmitting entity, or all or some of an uplink measurement component carrier set.

Preferably, the at least one uplink component carrier, on which the channel measurement for the component carrier setup will be performed, may not include an uplink primary component carrier (CC).

Preferably, the sounding reference signal is transmitted by at least one of a periodic transmission scheme defined for sounding reference signal transmission for the component carrier setup and an aperiodic transmission scheme and is transmitted as a wideband sounding reference signal on the component carrier as a channel measurement target for the component carrier setup..

Preferably, the method may further include the steps of receiving an indication of a setup for an uplink component carrier determined based on the transmitted sounding reference signal from the uplink receiving entity and performing activation or deactivation of the uplink component carrier based on the indication.

To further achieve these and other advantages and in accordance with the purpose of the present invention, a method of receiving a downlink channel measurement information, which is received for a component carrier setup by a downlink transmitting entity in a multi-carrier supporting wireless communication system, according to another embodiment of the present invention may include the steps of transmitting an information on at least one downlink component carrier, on which a channel measurement for the component carrier setup will be performed, to a downlink receiving entity and receiving a report of a result of a downlink channel measurement on the at least one downlink component carrier from the downlink receiving entity, wherein the at least one downlink component carrier, on which the channel measurement will be performed, includes a component carrier not assigned to the downlink receiving entity.

To further achieve these and other advantages and in accordance with the purpose of the present invention, a method of receiving a sounding reference signal, which is received for a component carrier setup by an uplink receiving entity in a multi-carrier supporting wireless communication system, according to another embodiment of the present invention may include the steps of transmitting an information on at least one uplink component carrier, on which a channel measurement for the component carrier setup will be performed, to an uplink transmitting entity and receiving the sounding reference signal on the at least one uplink component carrier from the uplink transmitting entity, wherein the at least one uplink component carrier, on which the channel measurement will be performed, includes a component carrier not assigned to the uplink transmitting entity.

To further achieve these and other advantages and in accordance with the purpose of the present invention, a user equipment, which provides a downlink channel measurement information for a component carrier setup in a multi-carrier supporting wireless communication system, according to another embodiment of the present invention may include a receiving module receiving a downlink signal on at least one downlink component carrier from a base station, a transmitting module transmitting an uplink signal on at least one uplink component carrier to the base station, and a processor controlling the user equipment including the receiving module and the transmitting module, the processor configured to receive an information on at least one downlink component carrier, on which a channel measurement for the component carrier setup will be performed, from the base station via the receiving module, the processor configured to perform a downlink channel measurement on the at least one downlink component carrier, the processor configured to report a result of the downlink channel measurement to the base station via the transmitting module, wherein the at least one downlink component carrier, on which the channel measurement will be performed, includes a component carrier not assigned to the user equipment.

To further achieve these and other advantages and in accordance with the purpose of the present invention, a user equipment, which transmits a sounding reference signal for a component carrier setup in a multi-carrier supporting wireless communication system, according to another embodiment of the present invention may include a receiving module receiving a downlink signal on at least one downlink component carrier from a base station, a transmitting module transmitting an uplink signal on at least one uplink component carrier to the base station, and a processor controlling the user equipment including the receiving module and the transmitting module, the processor receiving an information on at least one uplink component carrier, on which a channel measurement for the component carrier setup will be performed, from the base station via the receiving module, the processor configured to transmit the sounding reference signal on the at least one uplink component carrier to the base station via the transmitting module, wherein the at least one uplink component carrier, on which the channel measurement will be performed, includes a component carrier not assigned to the user equipment.

To further achieve these and other advantages and in accordance with the purpose of the present invention, a base station, which receives a downlink channel measurement information for a component carrier setup in a multi-carrier supporting wireless communication system, according to another embodiment of the present invention may include a receiving module receiving an uplink signal on at least one uplink component carrier from a user equipment, a transmitting module transmitting a downlink signal on at least one downlink component carrier to the user equipment, and a processor controlling the base station including the receiving module and the transmitting module, the processor configured to transmit an information on at least one downlink component carrier, on which a channel measurement for the component carrier setup will be performed, to the user equipment via the transmitting module, the processor configured to receive a report of a result of a downlink channel measurement on the at least one downlink component carrier from the user equipment, wherein the at least one downlink component carrier, on which the channel measurement will be performed, includes a component carrier not assigned to the user equipment.

To further achieve these and other advantages and in accordance with the purpose of the present invention, a base station, which receives a sounding reference signal for a component carrier setup in a multi-carrier supporting wireless communication system, according to a further embodiment of the present invention may include a receiving module receiving an uplink signal on at least one uplink component carrier from a user equipment, a transmitting module transmitting a downlink signal on at least one downlink component carrier to the user equipment, and a processor controlling the base station including the receiving module and the transmitting module, the processor configured to transmit an information on at least one uplink component carrier, on which a channel measurement for the component carrier setup will be performed, to the user equipment via the transmitting module, the processor configured to receive the sounding reference signal on the at least one uplink component carrier from the user equipment via the receiving module, wherein the at least one uplink component carrier, on which the channel measurement will be performed, includes a component carrier not assigned to the user equipment.

The above-mentioned general description for the present invention and the following details of the present invention may be exemplary and are provided for the additional description for the inventions in the appended claims.

## ADVANTAGEOUS EFFECTS

Accordingly, the present invention may be able to provide an efficient channel measuring method in a multi-carrier supporting system, thereby supporting carrier configuration to be correctly achieved. In case that dynamic component carrier (CC) activation/deactivation is applied, the present invention provides a channel measurement applied target and a channel measuring method, thereby providing a method and apparatus for efficiently performing dynamic configuration and/or modification of a component carrier.

Effects obtainable from the present invention are non-limited by the above mentioned effect. And, other unmentioned effects can be clearly understood from the following description by those having ordinary skill in the technical field to which the present invention pertains.

## DESCRIPTION OF DRAWINGS

The accompanying drawings, which are included to provide a further understanding of the invention and are incorporated in and constitute a part of this application, illustrate embodiment(s) of the invention and together with the description serve to explain the principle of the invention.

FIG. 1 is a diagram for a structure of a radio frame used by 3GPP LTE system.

FIG. 2 is a diagram of a resource grid in a downlink slot.

FIG. 3 is a diagram for a structure of a downlink (DL) subframe.

FIG. 4 is a diagram for a structure of an uplink (UL) subframe.

FIG. 5 is a diagram for configurations of a physical layer (L1) and a MAC layer (L2) in a multi-carrier supporting system.

FIG. 6 is a conceptional diagram of component carriers (CCs) in downlink and component carriers (CCs) in uplink.

FIG. 7 is a diagram for one example of DL/UL CC linkage.

FIG. 8 is a diagram to illustrate SC-FDMA transmission scheme and OFDMA transmission scheme.

FIG. 9 is a diagram to illustrate a maximum transmission power for a single antenna transmission and a maximum transmission power for a multi-antenna transmission.

FIG. 10 is a diagram for a configuration of a multi-antenna (MIMO) communication system.

FIG. 11 is a diagram of a general CDD structure in a multi-antenna (MIMO) system.

FIG. 12 is a diagram to illustrate codebook based precoding.

FIG. 13 is a diagram for a resource mapping structure of PUCCH in an uplink (UL) physical resource block.

FIG. 14 is a diagram for a structure of ACK/NACK channel in case of a normal CP.

FIG. 15 is a diagram of a resource mapping structure in case of applying a shortened ACK/NACK format.

FIG. 16 is a diagram for a structure of SR channel in one slot.

FIG. 17 is a diagram to illustrate simultaneous transmission of ACK/NACK information and SR.

FIG. 18 is a diagram for a channel structure of CQI information bit.

FIG. 19 is a diagram to illustrate simultaneous transmission of CQI information and ACK/NACK information.

FIG. 20 is a diagram to illustrate feedback of channel status information.

FIG. 21 is a diagram to illustrate one example of a CQI reporting mode.

FIG. 22 is a diagram for one example of a scheme for a user equipment to periodically transmit channel information.

FIG. 23 is a diagram to illustrate transmission of SB CQI.

FIG. 24 is a diagram to illustrate transmission of WB CQI and SB CQI.

FIG. 25 is a diagram to illustrate transmission of WB CQI, SB CQI and RI.

FIG. 26 is a diagram for a method of measuring a downlink channel according to one embodiment of the present invention.

FIG. 27 is a diagram for a method of measuring an uplink channel according to one embodiment of the present invention.

FIG. 28 is a diagram for one example of a configuration of a user equipment device or a base station device according to one embodiment of the present invention.

## BEST MODE FOR INVENTION

First of all, the following embodiments correspond to combinations of elements and features of the present invention in prescribed forms. And, the respective elements or features may be considered as selective unless they are explicitly mentioned. Each of the elements or features can be implemented in a form failing to be combined with other elements or features. Moreover, an embodiment of the present invention may be implemented by combining elements and/or features together in part. A sequence of operations explained for each embodiment of the present invention may be modifiable. Some configurations or features of one embodiment may be included in another embodiment or substituted with corresponding configurations or features of another embodiment.

In this specification, embodiments of the present invention are described centering on the data transmission/ reception relations between a base station and a user equipment. In this case, the base station may be meaningful as a terminal node of a network which directly performs communication with the user equipment. In this specification, a specific operation explained as performed by a base station may be performed by an upper node of the base station in some cases.

In particular, in a network constructed with a plurality of network nodes including a base station, it is apparent that various operations performed for communication with a user equipment can be performed by a base station or other networks except the base station. 'Base station (BS)' may be substituted with such a terminology as a fixed station, a Node B, an eNode B (eNB), an access point (AP) and the like. And, in this specification, a terminology 'base station' may be used as having a cell or sector included concept. A relay may be substituted with such a terminology as a relay node (RN), a relay station (RS) and the like. And, 'terminal' may be substituted with such a terminology as a user equipment (UE), a mobile station (MS), a mobile subscriber station (MSS), a subscriber station (SS) and the like.

In the following description, specific terminologies used for embodiments of the present invention are provided to help the understanding of the present invention. And, the use of the specific terminology may be modified into another form within the scope of the technical idea of the present invention.

Occasionally, to prevent the present invention from getting vaguer, structures and/or devices known to the public may be skipped or represented as block diagrams centering on the core functions of the structures and/or devices. Wherever possible, the same reference numbers will be used throughout the drawings to refer to the same or like parts in this specification.

Embodiments of the present invention may be supported by the disclosed standard documents of at least one of wireless access systems including IEEE 802 system, 3GPP system, 3GPP LTE and LTE-A (LTE-Advanced) system and 3GPP2 system. In particular, the steps or parts, which are not explained to clearly reveal the technical idea of the present invention, in the embodiments of the present invention may be supported by the above documents. Moreover, all terminologies disclosed in this document may be supported by the above standard documents.

The following description of embodiments of the present invention may be usable for various wireless access systems including CDMA (code division multiple access), FDMA (frequency division multiple access), TDMA (time division multiple access), OFDMA (orthogonal frequency division multiple access), SC-FDMA (single carrier frequency division multiple access) and the like. CDMA can be implemented with such a radio technology as UTRA (universal terrestrial radio access), CDMA 2000 and the like. TDMA can be implemented with such a radio technology as GSM/GPRS/EDGE (Global System for Mobile communications)/General Packet Radio Service/Enhanced Data Rates for GSM Evolution). OFDMA can be implemented with such a radio technology as IEEE 802.11 (Wi-Fi), IEEE 802.16 (WiMAX), IEEE 802-20, E-UTRA (Evolved UTRA), etc. UTRA is a part of UMTS (Universal Mobile Telecommunications System). 3GPP (3rd Generation Partnership Project) LTE (long term evolution) is a part of E-UMTS (Evolved UMTS) that uses E-UTRA. The 3GPP LTE adopts OFDMA in downlink (hereinafter abbreviated DL) and SC-FDMA in uplink (hereinafter abbreviated UL). And, LTE-A (LTE-Advanced) is an evolved version of 3GPP LTE. WiMAX may be explained by IEEE 802.16e standard (e.g., WirelessMAN-OFDMA reference system) and advanced IEEE 802.16m standard (e.g., WirelessMAN-OFDMA advanced system). For clarity, the following description is made by mainly concerning 3GPP LTE system or 3GPP LTE-A system, by which the technical idea of the present invention may be non-limited.

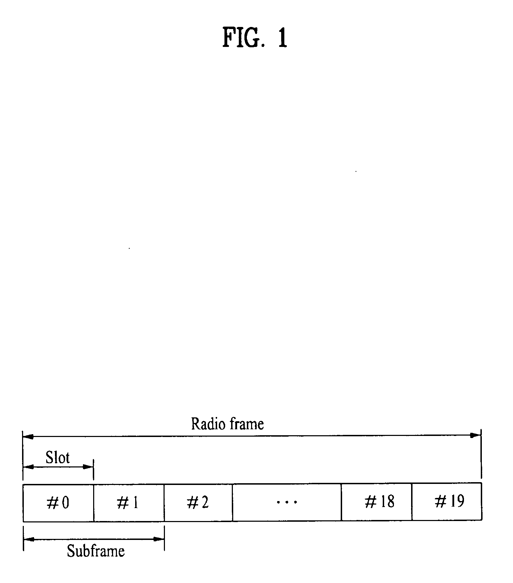

FIG. 1 is a diagram for a structure of a radio frame used by 3GPP LTE system. A radio frame includes 10 subframes. Each of the subframes includes 2 slots in time domain. And, a time taken to transmit one subframe is defined as a transmission time interval (hereinafter abbreviated TTI). For instance, one subframe can have a length of 1 ms and one slot can have a length of 0.5 ms. One slot may include a plurality of OFDM symbols in time domain. Since 3GPP LTE system uses OFDMA scheme in DL, the OFDM symbol indicates one symbol length (period). And, one symbol may be called SC-FDMA symbol or symbol period. A resource block (hereinafter abbreviated RB) is a resource allocation unit and includes a plurality of contiguous subcarriers in one slot. The structure of the radio frame shown in the drawing is exemplary. Optionally, the number of subframes included in one radio frame, the number of slots included in one subframe, or the number of symbols included in one slot may be modifiable in various ways.

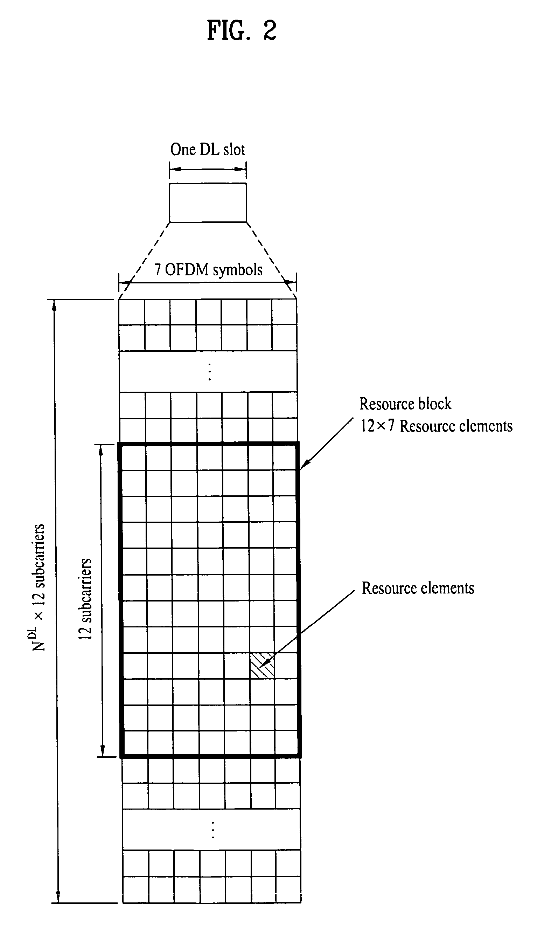

FIG. 2 is a diagram of a resource grid in DL slot. FIG. 2 shows that one DL slot may include 7 OFDM symbols in time domain and that one resource block (RB) includes 12 subcarriers in frequency domain, by which the present invention may be non-limited. For instance, in case of a normal CP (cyclic prefix), one slot may include 7 OFDM symbols. In case of an extended CP, one slot may include 6 OFDM symbols. Each element on a resource grid may be named a resource element (hereinafter abbreviated RE). One resource block may include $12 \times 7$ resource elements. The number $N^{DL}$ of resource blocks included in a DL slot may depend on a DL transmission bandwidth. A structure of a UL slot may be identical to that of the DL slot.

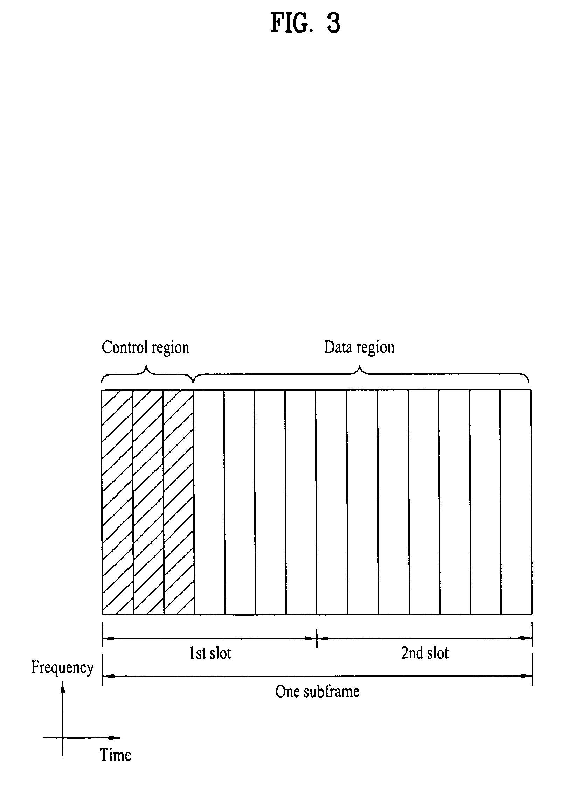

FIG. 3 is a diagram for a structure of a downlink (DL) subframe. Maximum 3 OFDM symbols situated in a fore part of a first slot of one subframe correspond to a control region to which a control channel is allocated. The rest of OFDM symbols correspond to a data region to which PDSCH (physical downlink shared channel) is allocated. Examples of a DL control channel used by 3GPP LTE system may include PCFICH (Physical Control Format Indicator Channel), PDCCH (Physical Downlink Control Channel), PHICH (Physical hybrid automatic repeat request indicator Channel) and the like. The PCFICH is transmitted in a first OFDM symbol of a subframe and includes information on the number of OFDM symbols used for a transmission of a control channel within the subframe. The PHICH includes HARQ ACK/NACK signal in response to a UL transmission. Control information carried on PDCCH may be called downlink control information (DCI). The DCI may include UL or DL scheduling information or a UL transmission power control command for a random UE (user equipment) group. The PDCCH may include resource allocation and transmission format of DL-SCH (downlink shared channel), resource allocation information on UL-SCH (uplink shared channel), paging information on PCH (paging channel), system information on DL-SCH, resource allocation of such an upper layer control message as a random access response transmitted on PDSCH, a transmission power control command set for individual UEs within a random UE group, transmission power control information, activation of VoIP (voice over IP) and the like. A plurality of PDCCHs can be transmitted within the control region. A user equipment may be able to monitor a plurality of the PDCCHs. The PDCCH is transmitted as an aggregation of at least one or more contiguous CCEs (control channel elements). The CCE is a logical allocation unit used to provide the PDCCH at a coding rate based on a radio channel status. The CCE may correspond to a plurality of REGs (resource element groups). A format of the PDCCH and the number of available PDCCH bits may be determined in accordance with correlation between the number of CCEs and a coding rate provided by the CCE. A base station determines a PDCCH format in accordance with a DCI which is to be transmitted to a user equipment and attaches a CRC (cyclic redundancy check) to control information. The CRC is masked with an identifier named RNTI (radio network temporary identifier) in accordance with an owner or usage of the PDCCH. For instance, if the PDCCH is provided for a specific user equipment, the CRC may be masked with an identifier (e.g., cell-RNTI (C-RNTI)) of the corresponding user equipment. In case that the PDCCH is provided for a paging message, the CRC may be masked with a paging indicator identifier (e.g., P-RNTI). If the PDCCH is provided for system information (particularly, for a system information block (SIB)), the CRC may be masked with a system information identifier and a system information RNTI (SI-RNTI). In order to indicate a random access response for a transmission of a random access preamble of a user equipment, the CRC may be masked with RA-RNTI (random access-RNTI).

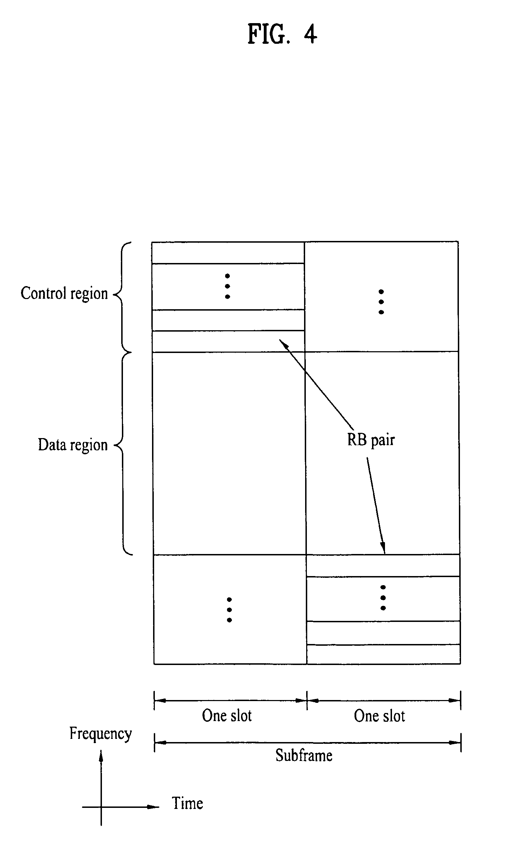

FIG. 4 is a diagram for an uplink (UL) subframe. A UL subframe may be divided into a control region and a data region in frequency domain. A physical UL control channel (PUCCH) including UL control information may be allocated to the control region. And, a physical UL shared channel (PUSCH) including user data may be allocated to the data region. In order to maintain single carrier property, one user equipment does not transmit PUCCH and PUSCH simultaneously. PUCCH for one user equipment may be allocated to a resource block pair (RB pair). Resource blocks belonging to the resource block pair may occupy different subcarriers for 2 slots. Namely, a resource block pair allocated to PUCCH is frequency-hopped on a slot boundary.

Carrier Aggregation

Generally, one carrier is mainly taken into consideration in a wireless communication system although an uplink and a downlink are set to differ from each other in bandwidth. For instance, based on a single carrier, it may be able to provide a wireless communication system, in which the number of carrier configuring each of uplink and downlink is set to 1 and in which bandwidths of the uplink and downlink are symmetric to each other in general.

According to ITU (international telecommunication union), a technology candidate for IMT-Advanced is requested to support a bandwidth extended more than that of a conventional wireless communication system. Yet, frequency allocation of wider bandwidth is not globally available for many areas except some particular areas. As a technology for using fragmented small bands efficiently, there is an ongoing development of carrier aggregation (e.g., bandwidth aggregation, spectrum aggregation, etc.) to bring the same effect of using a band of logically wider bandwidth by physically bundling a plurality of bands together.

Carrier aggregation is introduced to support an increasing throughput, prevent a cost increase due to an introduction of a wideband RF device, and secure compatibility with a legacy system. Carrier aggregation is the technology for enabling data to be exchanged between a user equipment and a base station through a plurality of bundles of carriers by bandwidth unit defined in a legacy wireless communication (e.g., LTE system in case of LTE-A system, IEEE 802.16e system in case of IEEE 802.16m system). In this case, a carrier of a bandwidth unit defined in a legacy wireless communication system may be called a component carrier (hereinafter abbreviated CC). For instance, the carrier aggregation technology may include a scheme of supporting a system bandwidth up to maximum 100 MHz by making a bundle of maximum 5 CCs despite that one CC supports a bandwidth of 5 MHz, 10 MHz or 20 MHz.

Downlink component carrier may be represented as DL CC and UL component carrier may be represented as UL CC. A carrier or a component carrier may be represented as a cell in accordance with a method described and represented in aspect of functional configuration in the standard of 3GPP. Hence, DL CC and UL CC may be represented as DL cell and UL cell, respectively. In the following description of the present invention, a plurality of carriers having carrier aggregation applied thereto may be represented using such a terminology as a carrier, a component carrier, a CC, a cell and the like.

And, in the following description of the present invention, a base station (or cell) will be mainly given as an example of a downlink transmission entity and a user equipment will be mainly given as an example of an uplink transmission entity, by which the present invention may be non-limited. In particular, the details of the present invention may also be applied to a case that a relay node acts as an entity of a downlink transmission to a user equipment or an entity of an uplink reception from a user equipment or a case that a relay node acts as an entity of an uplink transmission to a base station or an entity of a downlink reception from a base station.

According to downlink carrier aggregation, a base station supports a downlink transmission to a user equipment using a frequency domain resource (e.g., a sub-carrier, a PRB (Physical Resource Block), etc.) on at least one sub-carrier band in a prescribed time domain resource (a sub-frame unit). According to uplink carrier aggregation, a user equipment support an uplink transmission to a base station using a frequency domain resource (e.g., a sub-carrier, a PRB) on at least one sub-carrier band in a time domain resource (a sub-frame unit).

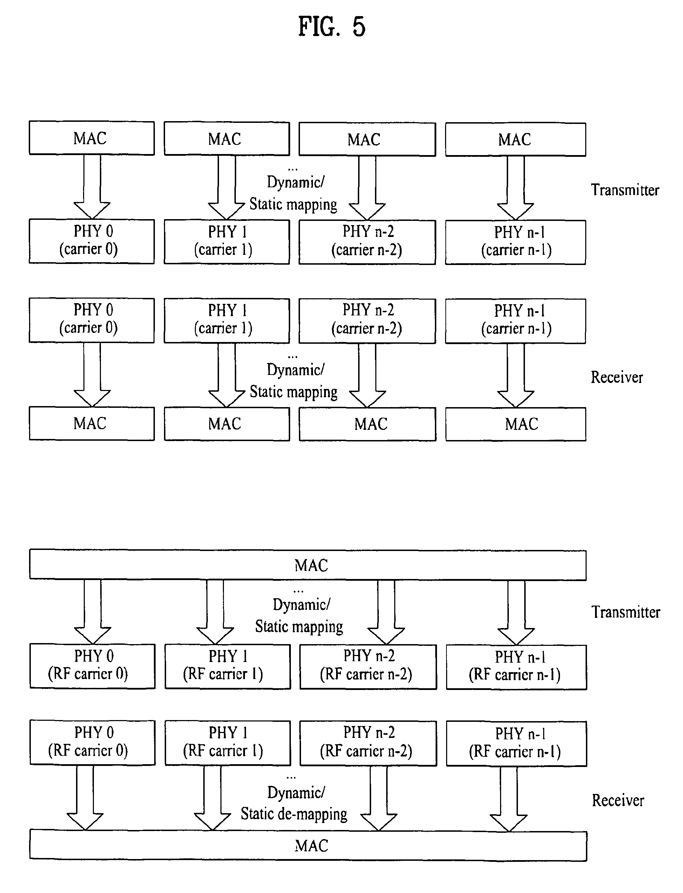

Configurations of a physical layer (1st layer, L1) and a MAC layer (2nd layer, L2) in a multi-carrier supporting system are described with reference to FIG. 5 as follows. A base station of a conventional wireless communication system, which supports a single carrier, includes one physical layer (PHY) entity supporting one carrier and may provide one MAC (Medium Access Control) entity for controlling one PHY entity. In the PHY layer, for example, a baseband processing operation may be performed. In the MAC layer, for example, a transmitting unit may generate a MAC PDU (Protocol Data Unit) and perform scheduler operations of L1/L2 including MAC/RLC sublayers. MAC PDU packet block of the MAC layer enters a logical transport layer, is converted and outputted as a transport block from the logical transport layer, and is then mapped to a physical layer input information block. The MAC layer shown in the drawing is represented as a whole L2 layer and may be applicable with the meaning that covers MAC, RLC and PDCP sublayers. It is apparent that this application may be applicable in a manner of being substituted for the MAC layer descriptions through the present invention.

Meanwhile, in a multi-carrier supporting system, a plurality of MAC-PHY entities may be provided. In particular, referring to FIG. 5(a), a transmitter and a receiver of the multi-carrier supporting system may be configured to have one MAC-PHY entity correspond to each of n component carriers. Since PHY layer and MAC layer are configured independent from each other for each component carrier, PDSCH may be generated for each component carrier in the physical layer from the MAC PDU.

Alternatively, a multi-carrier supporting system may also be configured with a single common MAC entity and a plurality of PHY entities. In particular, referring to FIG. 5 (b), a transmitter and a receiver of the multi-carrier supporting system may be configured to have n PHY entities correspond to n component carriers, respectively and to have one common MAC entity control the n PHY entities. In this case, a MAC PDU from a single MAC layer may be divided into a plurality of transport blocks corresponding to a plurality of component carriers in a transport layer, respectively. Alternatively, when MAC PDU is generated in a MAC layer or RLC PDU is generated in an RLC layer, the PDU may diverge with respect to each component carrier. Accordingly, PDSCH may be generated for each component carrier in a physical layer.

PDCCH carrying control informations of L1/L2 control signaling generated from a packet scheduler of the MAC layer may be transmitted in a manner of being mapped to a physical resource for each individual component carrier. In doing so, PDCCH including control information (downlink allocation or uplink grant) for the PDSCH or PUSCH transmission for a specific user equipment may be separately encoded for each component carrier that carries the corresponding PDSCH/PUSCH. This PDCCH may be referred to as a separate coded PDCCH. Meanwhile, control informations for PDSCH/PUSCH transmissions of a plurality of component carriers may be transmitted in a manner of being configured into a single PDCCH. And, such PDCCH may be referred to as a joint coded PDCCH.

In order to support carrier aggregation, a connection need to be already established between a base station and a user equipment (or a relay node), or a preparation for the connection establishment is necessary, whereby a control channel (PDCCH or PUCCH) and/or a shared channel (PDSCH or PUSCH) can be transmitted. For the above connection or the connection establishment for each specific user equipment (or relay node), a measurement and/or reporting of carrier necessary. And, component carriers corresponding to targets of such carrier measurement and/or reporting may be assigned. In particular, component carrier assignment may mean that component carriers, which are to be used for uplink/downlink transmissions, are configured among uplink/downlink component carriers configured by the base station in consideration of the capability of a specific user equipment (or relay node) and system environment [i.e., designating number component carriers and component carrier index].

In doing so, when a 3rd layer (L3) RRM (Radio Resource Management) controls component carrier assignment, UE-specific or RN-specific RRC signaling may be usable. Alternatively, cell-specific or cell cluster-specific RRC signaling may be usable. When such a dynamic control as a setting of activation/deactivation of a series of component carriers is necessary for the component carrier assignment, a predetermined PDCCH may be used for L1/L2 control signaling or a physical control channel dedicated to component carrier assignment control information or a PDSCH configured in L2 MAC message format may be usable. Meanwhile, when a packet scheduler controls the component carrier assignment, a prescribed PDCCH may be used for L1/L2 control signaling or a physical control channel dedicated to component carrier assignment control information may be usable, or a PDSCH configured in L2 MAC message format may be usable.

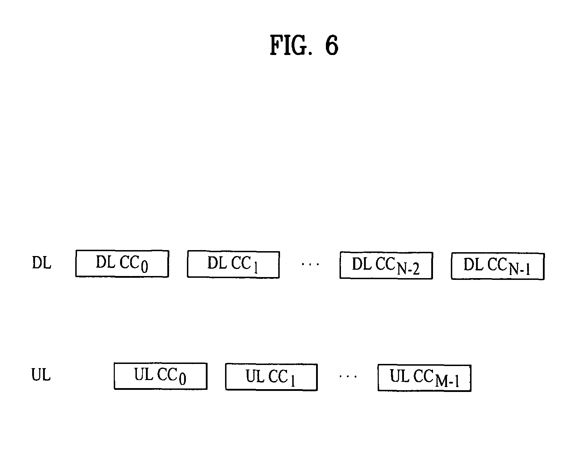

FIG. 6 is a conceptional diagram of component carriers (CCs) in downlink and component carriers (CCs) in uplink. Downlink (DL) and uplink (UL) CCs shown in FIG. 6 may be assigned by a base station (cell) or a relay node. For example, the number of DL CCs may be set to N and the number of UL CCs may be set to M.

After a step (e.g., a cell search procedure, a system information acquisition/reception procedure, an initial random access procedure, etc.) of establishing an RRC connection has been performed on each of DL and UL based upon a single random CC through an initial access or initial deployment process by a user equipment, a carrier configuration unique to each user equipment may be received from a base station via a dedicated signaling (e.g., a UE-specific RRC signaling, a UE-specific L1/L2 PDCCH signaling, etc.). Alternatively, when carrier configuration for a user equipment is accomplished in common by a base station (cell or cell cluster) unit, the carrier configuration may be provided via a cell-specific RRC signaling or a cell-specific UE-common L1/L2 PDCCH signaling. Alternatively, carrier configuration information configured by a base station may also be signaled to a user equipment via system information for the RRC connection establishment or may be signaled to the user equipment via separate system information or a cell-specific RRC signaling after completion of the RRC connection establishing step.

In this disclosure, DL/UL CC configuration is described by being focused upon the relation between a base station and a user equipment, by which the present invention may be non-limited. For example, for a user equipment located in a relay node area, the description given herein may be identically applicable to the case that a relay node provides DL/UL CC configurations of a corresponding user equipment. Also, for a relay node located in a base station area, the description given herein may also be identically applicable to the case that the base station provides the DL/UL CC configurations of the corresponding relay node. Hereinafter, the DL/UL CC configurations are described in a manner of being focused upon the relation between the base station and the user equipment, for clarity. Nevertheless, it will be apparent that the same description may be identically applicable between a relay node and a user equipment (e.g., between an access uplink and an access downlink) or between a base station and a relay node (e.g., between a backhaul uplink and a backhaul downlink).

In the course of uniquely assigning DL/UL CCs to an individual user equipment, DL/UL CC linkage may be implicitly established, or be explicitly established in conjunction with the definition of random signaling parameters.

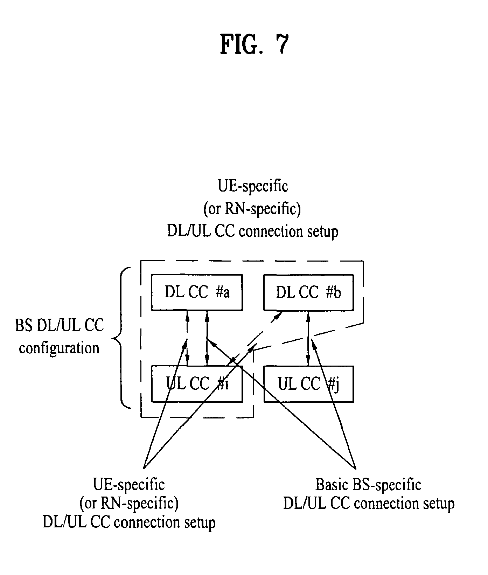

FIG. 7 is a diagram for one example of DL/UL CC linkage. When a base station configures CCs with 2 downlink CCs (DL CC #a and DL CC #b) and 2 uplink CCs (UL CC #i and UL CC #j), FIG. 7 shows one example of DL/UL CC linkage, which is defined in a manner that 2 downlink CCs (DL CC #a and DL CC #b) and 1 uplink CC (UL CC #i) are assigned to a random user equipment. In the DL/UL CC linkage shown in FIG. 7, the solid lines indicate the linkage configuration between the DL CCs and the UL CCs configured by a base station, which may be defined in SIB 2. In the DL/UL CC linkage shown in FIG. 7, the dotted lines indicate a linkage establishment between DL CCs and UL CCs that are configured for a specific user equipment. The establishment of the linkage between DL CC and UL CC in FIG. 7 is just exemplary, by which the present invention may be non-limited. In particular, according to various embodiments of the present invention, it will be apparent that the numbers of DL CCs and UL CCs configured by a base station can be set to random values, that the numbers of DL CCs and UL CCs being UE-specifically configured or assigned among the above-configured DL and UL CCs may be set to random values, and that DL/UL CC linkage associated with the settings may also be defined by a method other than the method shown in FIG. 7.

Among DL and UL CCs configured or set up for a random user equipment for a series of specific purposes, it may be able to configure a primary component carrier (PCC) (or a primary cell (P-cell) or an anchor component carrier (anchor CC) (or anchor cell). For instance, it may be able to configure DL PCC (or DL P-cell) for the purpose of a transmission of configuration/reconfiguration information on RRC connection establishment. For another instance, it may be able to configure UL PCC (or UL P-cell) that carries PUCCH to transmit UCI supposed to be transmitted in UL by a random user equipment. Basically, one DL PCC (P-cell) and one UL PCC (P-cell) are set specific to each user equipment. Alternatively, in case that a considerable amount of CCs are set for a user equipment or that CCs are configured by a plurality of base stations, one DL PCC (P-cell) or a plurality of DL PCCs (P-cells) and/or one UL PCC (P-cell) or a plurality of UL PCCs (P-cells) can be set for a random user equipment by one or more base stations. First of all, it may be able to consider a method for a base station to arbitrarily configure UE-specific linkage between DL PCC (P-cell) and UL PCC (P-cell). On the other hand, as a further simplified method, it may be able to configure linkage between DL PCC (P-cell) and UL PCC (P-cell) based on the relation of the basic linkage signaled by SIB (system information block (or base)) already defined in LTE Release-8 (Rel-8). The linkage configured DL PCC (P-cell) and UL PCC (P-cell) are combined together to be represented as UE-specific P-cell.

<u>SC-FDMA Transmission And OFDMA Transmission</u>

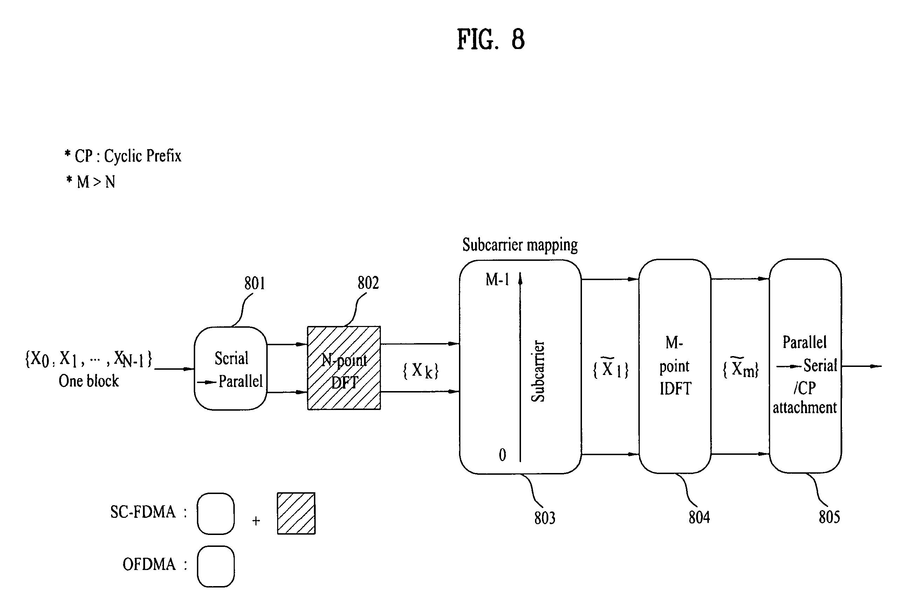

FIG. 8 is a diagram to illustrate SC-FDMA transmission scheme and OFDMA transmission scheme. SC-FDMA transmission scheme may be usable for an uplink transmission, while OFDMA transmission scheme may be usable for a downlink transmission.

Each of a UL signal transmitting entity (e.g., a user equipment) and a UL signal transmitting entity (e.g., a base station) identically includes a serial-to-parallel converter 801, a subcarrier mapper 803, an M-point IDFT (inverse discrete Fourier transform) module 804 and a parallel-to-serial converter 805. An input signal inputted to the serial-to-parallel converter 801 includes a channel-coded and modulated data symbol. Yet, a user equipment configured to transmit a signal by SC-FDMA additionally includes an N-point DFT (discrete Fourier transform) module 802 to cancel out an IDFT processing effect of the M-point IDFT module in part, whereby a transmitted signal can have single carrier property. In particular, the DFT module 802 performs DFT spreading on an inputted data symbol to meet the single carrier property required for an uplink transmission. This SC-FDMA transmission scheme basically provides good PAPR (peak to average power ratio) or CM (cubic metric) to enable an uplink transmitter to perform a transmission more efficiently despite power restricted situation, thereby raising user throughput.

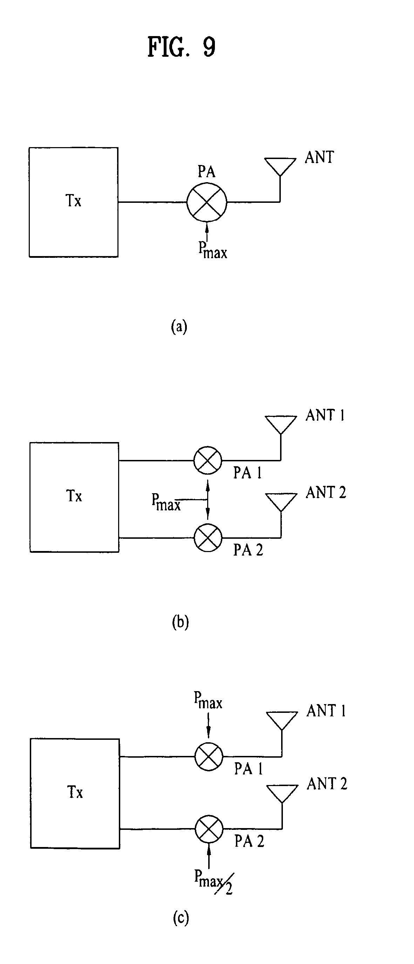

FIG. 9 is a diagram to illustrate a maximum transmission power for a single antenna transmission and a maximum transmission power for a multi-antenna transmission. FIG. 9 (a) shows a case of a single antenna transmission. One power amplifier PA may be provided to one antenna. In FIG. 9 (a), an output $P_{max}$ of a power amplifier can have a specific value, e.g., 23 dBm. FIG. 9 (b) shows a case of a multi-antenna transmission. And, FIG. 9 (c) shows a case of a multi-antenna transmission. In FIG. 9 (b) and FIG. 9 (c), a plurality of Pas may be mapped to a plurality of transmitting antennas, respectively. For instance, if the number of transmitting antennas is 2, 2 PAs are mapped to 2 transmitting antennas, respectively. Settings of output values (i.e., maximum transmission powers) of the 2 PAs may be configured different from each other, as shown in FIG. 9 (b) and FIG. 9 (c).

FIG. 9 (b) shows one example of a single antenna transmission in which a maximum transmission power value $P_{max}$ is divided and applied to PA1 and PA2. In particular, if a transmission power value of x dBm is set for the PA1, a transmission power value of $(P_{max} - x)$ dBm may be applied to the PA2. If so, since a total transmission power is maintained as $P_{max}$, a transmitter can have the property strong against the increase of PAPR under the transmission restricted circumstance.

FIG. 9 (c) shows one example of a case that one transmitting antenna ANT1 has a maximum transmission power $P_{max}$ only and that the other transmitting antenna ANT2 has a transmission power $P_{max}/2$ (i.e., half of the maximum transmission power $P_{max}$). If so, one transmitting antenna has property strong against the increase of PAPR.

<u>Multi-Antenna (MIMO) System</u>

Multi-antenna (MIMO) technology is the practical application of the technology of assembling pieces of data fragments received via several antennas to receive a message by avoiding a single antenna path. Since the MIMO technology increases a data transmission speed in a specific range or a system range for a specific data transmission rate, it is the next generation mobile communication technology widely applicable to a mobile communication user equipment, a relay node and the like. And, many ongoing attentions are paid to the MIMO technology as a next generation technology capable of overcoming the traffic limit of mobile communication reaching the limited situation due to data communication expansion and the like.

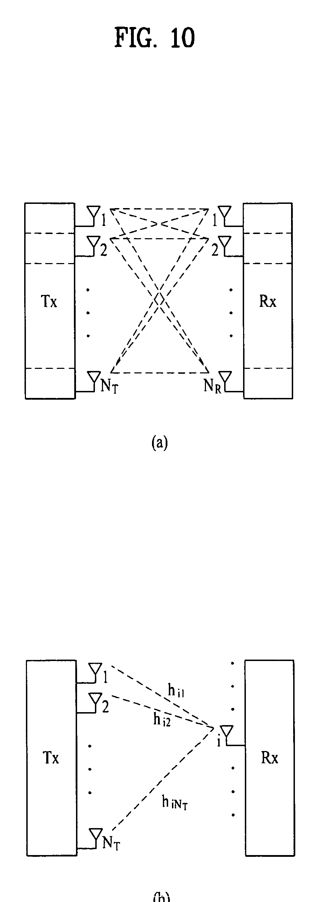

FIG. 10 (a) is a diagram for a configuration of a general MIMO communication system including multiple antennas. Referring to FIG. 10 (a), if the number of transmitting antennas and the number of receiving antennas are simultaneously incremented into $N_T$ and $N_R$, respectively, theoretical channel transmission capacity may increase in proportion to the number of antennas unlike the case that a transmitter or receiver uses a plurality of antennas. Hence, a transmission rate may be enhanced and frequency efficiency can be remarkably raised. The transmission rate according to the increase of the channel transmission capacity may be theoretically raised by an amount resulting from multiplying a maximum transmission rate $R_0$ of the case of using a single antenna by an increasing rate $R_i$ of Formula 1 in the following.

[Formula 1]

$$R_i = \min(N_T, N_R)$$

For instance, in an MIMO communication system, which uses 4 transmitting antennas and 4 receiving antennas, it may be able to obtain a transmission rate 4 times higher than that of a single antenna system. After this theoretical capacity increase of the MIMO system has been proved in the middle of 90's, many efforts are ongoing to be made to various techniques for drive it into substantial data rate improvement. Some of theses techniques are already adopted as standards for various wireless communications such as 3G mobile communications, a next generation wireless LAN and the like.

The trends for the MIMO relevant studies are explained as follows. First of all, many efforts are ongoing to be made in various aspects to develop and research information theory study relevant to MIMO communication capacity calculations and the like in various channel configurations and multiple access environments, radio channel measurement and model derivation study for MIMO systems, spatiotemporal signal processing technique study for transmission reliability enhancement and transmission rate improvement and the like.

In order to explain a communicating method in an MIMO system in detail, mathematical modeling can be represented as follows. Referring to FIG. 10 (a), assume that $N_T$ transmitting antennas and $N_R$ receiving antennas exist in this system. First of all, a transmitted signal is explained. If there are $N_T$ transmitting antennas, the number of maximum transmittable informations is $N_T$. Hence, the transmission information may be represented as a vector shown in Formula 2.

[Formula 2]

$$\mathbf{s} = \left[ s_1, s_2, \cdots, s_{N_T} \right]^T$$

Meanwhile, transmission power can be set different for each of transmission informations $S_1, S_2, \cdots, S_{N_T}$. If the respective transmission powers are set to $P_1, P_2, \cdots, P_{N_T}$, respectively, the transmission power adjusted transmission information may be represented as Formula 3.

[Formula 3]

$$\hat{\mathbf{s}} = \left[ \hat{s}_1, \hat{s}_2, \cdots, \hat{s}_{N_T} \right]^T = \left[ P_1 s_1, P_2 s_2, \cdots, P_{N_T} s_{N_T} \right]^T$$

And, S may be represented as Formula 4 using a transmission power diagonal matrix P.

[Formula 4]

$$\hat{\mathbf{s}} = \begin{bmatrix} P_1 & & & 0 \\ & P_2 & & \\ & & \ddots & \\ 0 & & & P_{N_T} \end{bmatrix} \begin{bmatrix} s_1 \\ s_2 \\ \vdots \\ s_{N_T} \end{bmatrix} = \mathbf{Ps}$$

If a weight matrix **W** is applied to the transmission power adjusted transmission information vector $\hat{\mathbf{s}}$ a case of configuring $N_T$ transmitted signals $x_1, x_2, \cdots, x_{N_T}$ actually transmitted can be taken into consideration as follows. In this case, the weight matrix **W** plays a role in properly distributing each transmission information to each antenna according to a transmission channel status and the like. The transmitted signals $x_1, x_2, \cdots, x_{N_T}$ may be represented as Formula 5 using a vector **X**. In Formula 5, $w_{ij}$ indicates a weight between an $i^{th}$ transmitting antenna and a $j^{th}$ information. And, **W** may be called a weight matrix or a precoding matrix.
[Formula 5]

$$\mathbf{x} = \begin{bmatrix} x_1 \\ x_2 \\ \vdots \\ x_i \\ \vdots \\ x_{N_T} \end{bmatrix} = \begin{bmatrix} w_{11} & w_{12} & \cdots & w_{1N_T} \\ w_{21} & w_{22} & \cdots & w_{2N_T} \\ \vdots & & \ddots & \\ w_{i1} & w_{i2} & \cdots & w_{iN_T} \\ \vdots & & & \ddots \\ w_{N_T1} & w_{N_T2} & \cdots & w_{N_TN_T} \end{bmatrix} \begin{bmatrix} \hat{s}_1 \\ \hat{s}_2 \\ \vdots \\ \hat{s}_j \\ \vdots \\ \hat{s}_{N_T} \end{bmatrix} = \mathbf{W}\hat{\mathbf{s}} = \mathbf{WPs}$$

When $N_R$ receiving antennas exist, if received signals of the receiving antennas are set to $y_1, y_2, \cdots, y_{N_R}$, a received signal vector can be represented as Formula 6.
[Formula 6]

$$\mathbf{y} = \begin{bmatrix} y_1, y_2, \cdots, y_{N_R} \end{bmatrix}^{\mathsf{T}}$$

Meanwhile, if a channel is modeled in MIMO wireless communication system, the channel can be identified by an index of a transmitting antenna and an index of a receiving antenna. A channel between a transmitting antenna j and a receiving antenna i may be represented as $h_{ij}$. Regarding an index order of the $h_{ij}$, it should be noted that a receiving antenna index is followed by a transmitting antenna index in order of index. These channels may be represented as a vector and matrix form in a manner of tying the channels together. One example of the vector expression is described as follows.
FIG. 10 (b) is a diagram of a channel to a receiving antenna i from each of $N_T$ transmitting antennas.
Referring to FIG. 10 (b), the channels between the receiving antenna i and the $N_T$ transmitting antennas can be represented as follows.
[Formula 7]

$$\mathbf{h}_i^T = \begin{bmatrix} h_{i1}, h_{i2}, \ldots, h_{iN_T} \end{bmatrix}$$

Hence, all the channels arriving at $N_R$ receiving antennas from $N_T$ transmitting antennas through the matrix expression shown in Formula 7 may be expressed as Formula 8.
[Formula 8]

$$\mathbf{H} = \begin{bmatrix} \mathbf{h}_1^{\mathbf{T}} \\ \mathbf{h}_2^{\mathbf{T}} \\ \vdots \\ \mathbf{h}_i^{\mathbf{T}} \\ \vdots \\ \mathbf{h}_{N_R}^{\mathbf{T}} \end{bmatrix} = \begin{bmatrix} h_{11} & h_{12} & \cdots & h_{1N_T} \\ h_{21} & h_{22} & \cdots & h_{2N_T} \\ \vdots & & & \ddots \\ h_{i1} & h_{i2} & \cdots & h_{iN_T} \\ \vdots & & & \ddots \\ h_{N_R1} & h_{N_R2} & \cdots & h_{N_RN_T} \end{bmatrix}$$

In an actual channel, a transmitted signal passes through a channel matrix **H** and then has AWGN (additive white Gaussian noise) added thereto. If white *noses* $n_1, n_2, \cdots, n_{N_T}$ are added to $N_R$ receiving antennas, respectively, the white noises $n_1, n_2, \cdots, n_{N_T}$ can be represented as a vector shown in Formula 9.
[Formula 9]

$$\mathbf{n} = \begin{bmatrix} n_1, n_2, \cdots, n_{N_R} \end{bmatrix}^{\mathbf{T}}$$

Hence, the received signal found by means of the above formulas may be represented as Formula 10.
[Formula 10]

$$\mathbf{y} = \begin{bmatrix} y_1 \\ y_2 \\ \vdots \\ y_i \\ \vdots \\ y_{N_R} \end{bmatrix} = \begin{bmatrix} h_{11} & h_{12} & \cdots & h_{1N_T} \\ h_{21} & h_{22} & \cdots & h_{2N_T} \\ \vdots & & & \ddots \\ h_{i1} & h_{i2} & \cdots & h_{iN_T} \\ \vdots & & & \ddots \\ h_{N_R1} & h_{N_R2} & \cdots & h_{N_RN_T} \end{bmatrix} \begin{bmatrix} x_1 \\ x_2 \\ \vdots \\ x_j \\ \vdots \\ x_{N_T} \end{bmatrix} + \begin{bmatrix} n_1 \\ n_2 \\ \vdots \\ n_i \\ \vdots \\ n_{N_R} \end{bmatrix} = \mathbf{Hx} + \mathbf{n}$$

Meanwhile, the number of rows and the number of columns in a channel matrix **H** indicating a channel status are dependent on the number of transmitting antennas and the number of receiving antennas. The number of rows in the channel matrix **H** is equal to the number $N_R$ of the receiving antennas. The number of columns in the channel matrix **H** is equal to the number $N_T$ of the transmitting antennas. In particular, the channel matrix **H** may be expressed as $N_R \times N_T$ matrix. Generally, a rank of matrix is defined as a smaller one of the number of independent rows and the number of independent columns. Hence, it may be impossible for a rank of matrix to have a value greater than the number of rows or columns. A rank of a channel matrix **H** may be represented as Formula 11.
[Formula 11]

$$rank(\mathbf{H}) \leq \min(N_T, N_R)$$

An MIMO scheme used for anoperation of an MIMO system may use one of FSTD (frequency switched transmit diversity), SFBC (Space Frequency Block Code), STBC (Space Time Block Code), CDD (Cyclic Delay Diversity), TSTD (time switched transmit diversity) and the like. At a rank 2 or higher, one of Spatial Multiplexing (SM), GCDD (Generalized Cyclic Delay Diversity), S-VAP (Selective Virtual Antenna Permutation) and the like may be usable.

The FSTD is a scheme of obtaining a diversity gain in a manner of assigning a subcarrier having a different frequency to each signal transmitted via each multi-antenna. The SFBC is a scheme of securing both a diversity gain and a multi-user scheduling gain in a corresponding dimension by efficiently applying selectivity in space domain or freqeuncy domain. The STBC is a scheme of applying selectivity in space domain or frequency domain. The CDD is a scheme of obtaining a diversity gain using a path delay between transmitting antennas. The TSTD is a scheme of identifying a signal transmitted via multi-antenna by time. The spatial multiplexing is a scheme of raising a transmission rate by transmitting data different per antenna. The GCDD is a scheme of applying selectivity in time domain or frequency domain. The S-VAP is a scheme of using a single precoding matrix and may be classified into MCS (multi codeword) S-VAP of mixing multiple codewords among antennas in space diversity or spatial multiplexing and SCW (single codeword) S-VAP in which a single codeword is used.

The STBC scheme among the aforementioned MIMO transmission schemes is the scheme of obtaining time diversity in a manner that the same data symbol is repeated by supporting orthogonality in time domain. Similarly, the SFBC scheme is the scheme of frequency diversity in a manner that the same data symbol is repeated by supporting orthogonality in frequency domain. An example of a time block code used by STBC and an example of a frequency block code used by SFBC are shown in Formula 12 and Formula 13, respectively. In particular, Formula 12 indicates a block code in case of 2 transmitting antennas and Formula 13 indicates a block code in case of 4 transmitting antennas.

[Formula 12]

$$\frac{1}{\sqrt{2}}\begin{pmatrix} S_1 & S_2 \\ -S_2^* & S_1^* \end{pmatrix}$$

[Formula 13]

$$\frac{1}{\sqrt{2}}\begin{pmatrix} S_1 & S_2 & 0 & 0 \\ 0 & 0 & S_3 & S_4 \\ -S_2^* & S_1^* & 0 & 0 \\ 0 & 0 & -S_4^* & S_3^* \end{pmatrix}$$

In Formula 12 and Formula 13, $S_i$ (i = 1, 2, 3, 4) indicates a modulated data symbol. In Formula 12 and Formula 13, a row of the matrix indicates an antenna port and a column of the matrix indicates a time (STBC case) or a frequency (SFBC case).

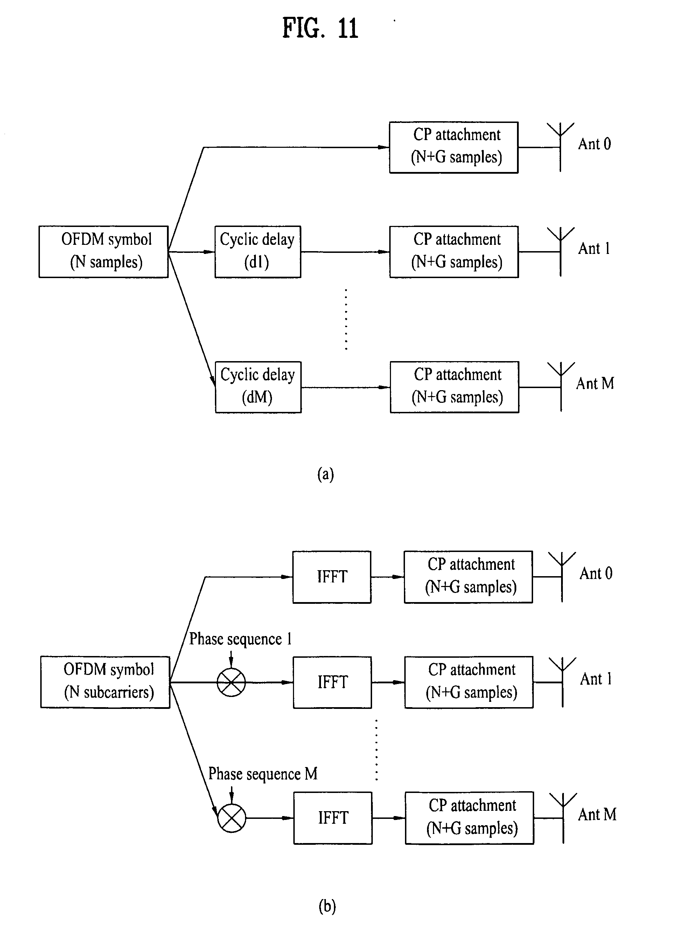

Meanwhile, the CDD scheme among the aforementioned MIMO transmission schemes is the scheme of increasing frequency diversity by artificially increasing a delay spread. FIG. 11 shows one example of a general CDD structure in a multi-antenna (MIMO) system. In particular, FIG. 11 (a) shows a scheme of applying a cyclic delay in time domain. The CDD scheme of applying the cyclic delay shown in FIG. 11 (a) may be implemented in a manner of applying phase-shift diversity shown in FIG. 11 (b).

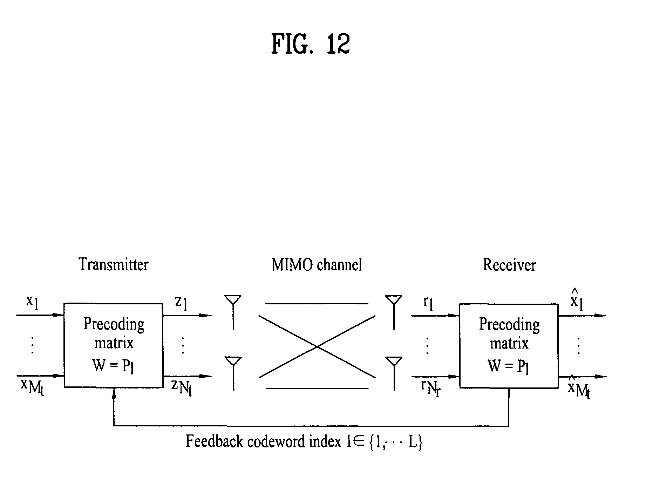

Meanwhile, regarding the aforementioned MIMO transmission schemes, a codebook based precoding scheme is described as follows. FIG. 12 is a diagram to illustrate a basic concept of codebook based precoding.

According to the codebook based precoding scheme, transmitting and receiving ends share codebook information including a prescribed number of precoding matrixes determined according to a transmission rank, the number of antennas and the like with each other. In particular, in case that feedback information is finite, it may be able to use a precoding based codebook scheme. A receiving end measures a channel status via a received signal and may be then able to feed back a finite number of preferred precoding matrix informations (i.e., indexes of corresponding precoding matrixes). For instance, the receiving end may be able to select an optimal precoding matrix by measuring a received signal by ML (maximum likelihood) or MMSE (minimum mean square error). FIG. 12 shows that a receiving end transmits precoding matrix information per codeword to a transmitting end, by which the present invention may be non-limited.

Having received feedback information from the receiving end, the transmitting end may be able to select a specific precoding matrix from a codebook based on the received information. Having selected the precoding matrix, the transmitting end performs precoding in a manner of multiplying layer signals, of which number corresponds to a transmission rank, by the selected precoding matrix and may be then able to transmit the precoded transmitted signal via a plurality of antennas.

Having received the signal precoded and transmitted by the transmitting end, the receiving end may be able to reconstruct the received signal by performing an inverse processing of the precoding performed by the transmitting end. As a precoding matrix meets such a unitary matrix (U) as 'U * $U^H$ = I', the aforementioned inverse processing of the precoding may be performed in a manner of multiplying the received signal by Hermit matrix ($P^H$) of the precoding matrix (P) used for the precoding of the transmitting end.

Physical Uplink Control Channel (PUCCH)

In the following description, a physical uplink control channel containing uplink control information is explained in detail.

First of all, PUCCH may be modulated using BPSK (binary phase shift keying) and QPSK (quadrature phase shift keying). Control information on a plurality of user equipments may be transmitted on PUCCH. When Code Division Multiplexing (CDM) is performed in order to identify signals of a plurality of the user equipments, 12 CAZAC (Constant Amplitude Zero Autocorrelation) sequences are mainly used. Since CAZAC sequence has the property of maintaining a constant amplitude in time domain or frequency domain, the CAZAC sequence is most appropriate for decreasing a PAPR (Peak-to-Average Power Ratio) or CM (Cubic Metric) of a user equipment so as to increase a coverage. And, ACK/NACK information on a transmission of downlink data, which is transmitted on PUCCH, may be covered using an orthogonal sequence.

Control information transmitted on PUCCH may be identified using cyclically shifted sequences including different cyclic shift values. The cyclically shifted sequence may be generated by cyclically shifting a base sequence by a specific CS (cyclic shift) amount. The specific CS amount is indicated by a cyclic shift (CS) index. The number of available cyclic shifts may vary by depending upon a delay spread of a channel. One of sequences of various types may be used as the base sequence. And, the aforementioned CAZAC sequence is one example of those sequences.

PUCCH may contain such control information as Scheduling Request (SR), downlink channel measurement information, and ACK/NACK information on a downlink data transmission. The channel measurement information may include Channel Quality Indicator (CQI), Precoding Matrix Index (PMI), and Rank Indicator (RI).

A PUCCH format may be defined in accordance with a type of control information contained in PUCCH, a demodulation scheme, and so on. In particular, PUCCH format 1 is used for SR transmission, PUCCH format 1a or PUCCH format 1b is used for HARQ ACK/NACK transmission, PUCCH format 2 is used for CQI transmission, and PUCCH format 2a/2b is used for CQI and HARQ ACK/NACK transmission.

In a random subframe, when HARQ ACK/NACK is independently transmitted, PUCCH format 1a or PUCCH format 1b may be used. When SR is independently transmitted, PUCCH format 1 may be used. A user equipment may transmit the HARQ ACK/NACK and the SR in the same subframe, which shall be described later.

The PUCCH format may be summarized into Table 1 below.

[Table 1]

| PUCCH format | Modulation scheme | Number of bits per subframe | Usage | etc. |
|---|---|---|---|---|
| 1 | N/A | N/A | SR(Scheduling Request) | |
| 1a | BPSK | 1 | ACK/NACK | One codeword |
| 1b | QPSK | 2 | ACK/NACK | Two codeword |
| 2 | QPSK | 20 | CQI | Joint Coding ACK/NACK (extended CP) |

(continued)

| PUCCH format | Modulation scheme | Number of bits per subframe | Usage | etc. |
|---|---|---|---|---|
| 2a | QPSK+BPSK | 21 | CQI+ACK/NACK | Normal CP only |
| 2b | QPSK+BPSK | 22 | CQI+ACK/NACK | Normal CP only |

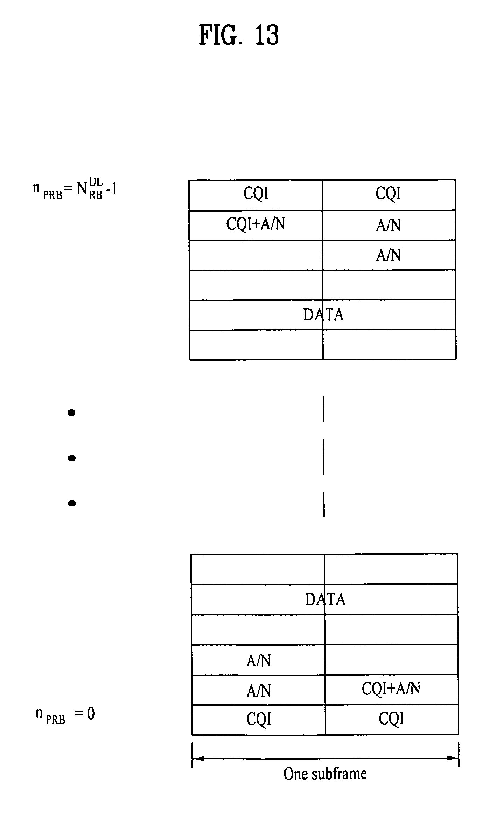

FIG. 13 shows a resource mapping structure of PUCCH in an uplink (UL) physical resource block. The $N_{RB}^{UL}$ indicates the number of resource blocks in UL and $n_{PRB}$ means a physical resource block number. PUCCH is mapped to both side edges of a UL frequency block. CQI resource is mapped to a physical resource block right next to a frequency band edge. And, ACK/NACK may be mapped next to the CQI resource.

In the following description, PUCCH formats are explained in detail.

Prior to the description of PUCCH format 1, PUCCH format 1a and PUCCH format 1b are described as follows. PUCCH format 1a/1b is a control channel used for ACK/NACK transmission.

In PUCCH format 1a/1b, a symbol modulated by BPSK or QPSK modulation scheme may be multiplied by a CAZAC sequence having a length of 12. After completion of the CAZAC sequence multiplication, it is spread with an orthogonal sequence block-wise. Hadamard sequence having a length of 4 is used for normal ACK/NACK information. DFT (discrete Fourier transform) sequence having a length of 3 is used for shortened ACK/NACK information and reference signal. Hadamard sequence having a length of 2 is used for a reference signal in case of an extended CP.

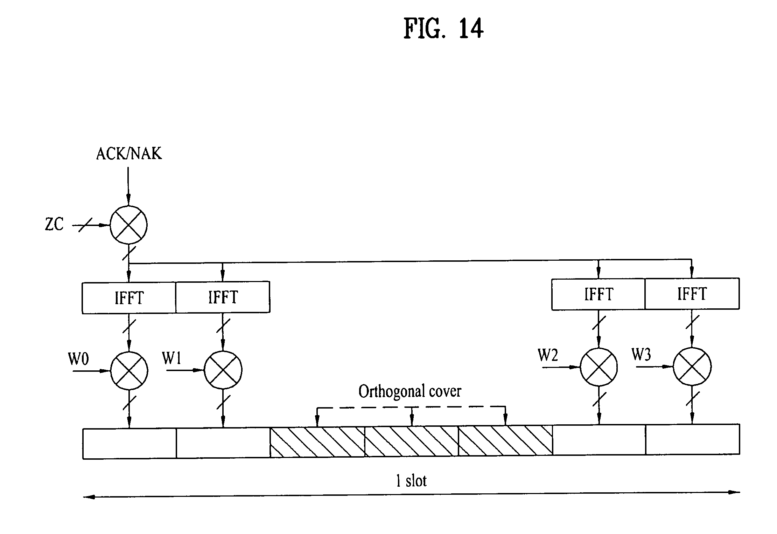

FIG. 14 shows a structure of ACK/NACK channel in case of a normal CP. A reference signal (RS) is carried on 3 contiguous symbols of a middle part in 7 OFDM symbols included in one slot and an ACK/NACK signal is carried on the 4 remaining OFDM symbols. The number and location of symbols used for RS may vary in accordance with a control channel and the number and location of symbols used for an associated ACK/NACK signal may vary correspondingly. The number of ACK/NACK channels available per resource block may include 12, 18 or 36 in case of a normal CP. The number of ACK/NACK channels available per resource block may include 8 or 12in case of an extended CP.

When a control signal is transmitted within an allocated band, 2-dimensional spreading may be applicable to increase multiplexing capacity. In particular, both frequency domain spread and time domain spread are simultaneously applied to increment the number of user equipments, which can be multiplexed, or the number of control channels. In order to spread ACK/NACK signal in frequency domain, a frequency domain sequence may be used as a base sequence. Zadoff-Chu (ZC) sequence corresponding to one of CAZAC sequences may be used as a frequency domain sequence. The frequency-domain-spread ACK/NACK signal undergoes IFFT and is then spread in time domain using a time domain sequence. For instance, ACK/NACK signal may be spread using an orthogonal sequence (w0, w1, w2, w3) having a length of 4 for 4 symbols. And, RS may be spread through an orthogonal sequence having a length of 3. This may be called 'orthogonal covering'.

Examples of sequences used for the spread of ACK/NACK information may be shown in Table 2 and Table 3. Table 2 shows a sequence for a length-4 symbol. Table 3 shows a sequence for a length-3 symbol. A sequence for a length-4 symbol may be used for PUCCH format 1/1a/1b of a general subframe configuration. In consideration of a case that SRS (sounding reference signal) is transmitted on a last symbol of a 2nd slot in a subframe configuration, a sequence for a length-4 symbol may be applied to a 1st slot and a shortened PUCCH format 1/1a/1b of a sequence for a length-3 symbol may be applied to a 2nd slot.

[Table 2]

| Sequence Index | [w(0), w(1), w(2), w(3)] |
|---|---|
| 0 | [+1 +1 +1 +1] |
| 1 | [+1 -1 +1 -1] |
| 2 | [+1 -1 -1 +1] |

[Table 3]

| Sequence Index | [w(0), w(1), w(2)] |
|---|---|
| 0 | [1 1 1] |
| 1 | [1 $e^{J2\pi/3}$ $e^{j4\pi/3}$] |
| 2 | [1 $e^{J4\pi/d}$ $e^{j2\pi/3}$] |

Meanwhile, one example of an orthogonal sequence used for a spread of RS of ACK/NACK channel is shown in Table 4.

[Table 4]

| Sequence Index | Normal CP | Extended CP |
|---|---|---|
| 0 | [1 1 1] | [1 1] |
| 1 | [1 $e^{j2\pi/3}$ $e^{j4\pi/3}$] | [1 -1] |
| 2 | [1 $e^{j4\pi/3}$ $e^{j2\pi/3}$] | N/A |

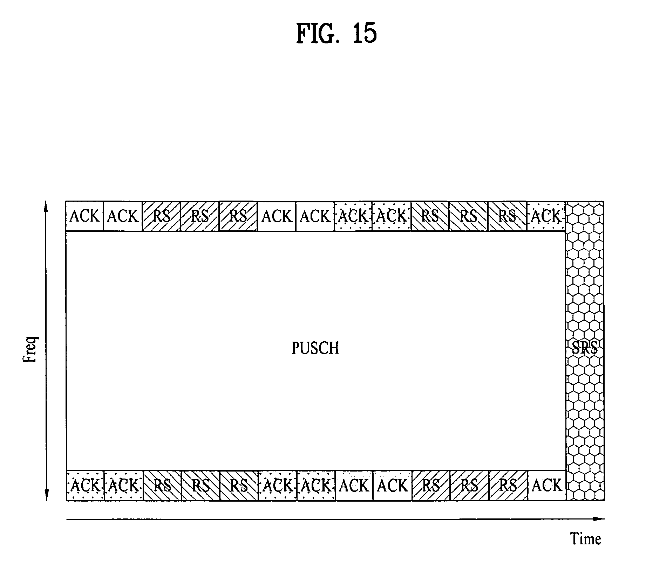

FIG. 15 shows a resource mapping structure in case of applying a shortened ACK/NACK format. A shortened ACK/NACK format may be used if both ACK/NACK and a sounding reference signal (SRS) need to be simultaneously transmitted. And, the shorted ACK/NACK format may be set by an upper layer signaling.

In the following description, PUCCH format 1 is explained. The PUCCH format 1 is a control channel used for SR transmission.

Scheduling request (SR) is transmitted in a manner that a user equipment requests to be scheduled or does not request to be scheduled. SR channel reuses ACK/NACK channel structure in PUCCH format 1a/1b and is configured by OOK (on-off keying) scheme based on ACK/NACK channel design. A reference signal is not transmitted on SR channel. Hence, a sequence having a length of 7 is used for a normal CP. And, a sequence having a length of 6 is used for an extended CP. Different cyclic shifts or orthogonal covers may be applied to SR and ACK/NACK, respectively.

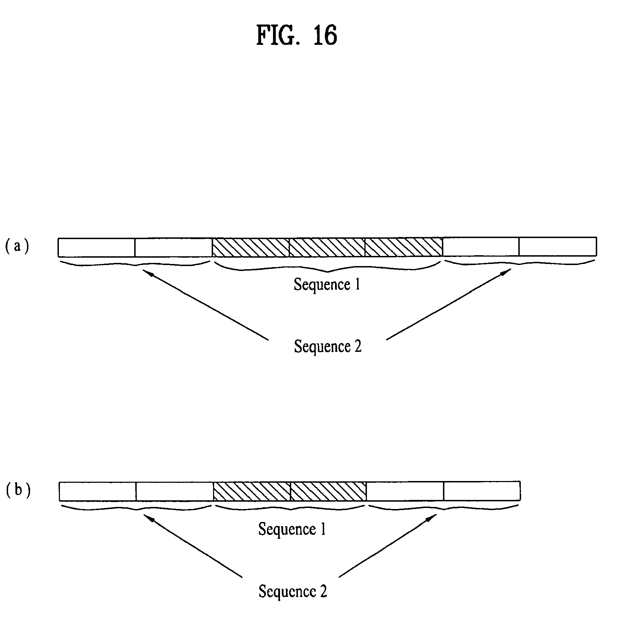

FIG. 16 shows a structure of a channel of a scheduling request in one slot. Referring to FIG. 16 (a), in case of a normal CP, a sequence having a length of 7 is separated into 2 orthogonal sequences (i.e., sequence 1 and sequence 2). Referring to FIG. 16 (b), in case of an extended CP, a sequence having a length of 6 is separated into 2 orthogonal sequences (i.e., sequence 1 and sequence 2).

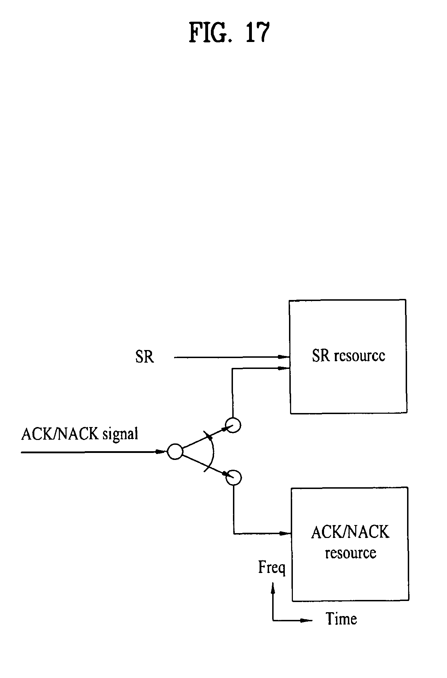

With reference to FIG. 17, a case of transmitting ACK/NACK information and SR simultaneously is described as follows. As mentioned in the foregoing description, a user equipment may be able to transmit HARQ ACK/NACK and SR in a same subframe. For a positive SR transmission, a user equipment transmits HARQ ACK/NACK on a resource allocated for SR. For a negative SR transmission, a user equipment transmits HARQ ACK/NACK on a resource allocated for ACK/NACK.

In the following description, PUCCH format 2/2a/2b is explained. PUCCH format 2/2a/2b is a control channel to transmit channel measurement feedback (CQI, PMI, RI).

According to PUCCH format 2/2a/2b, modulation by CAZAC sequence is supported and a QPSK modulated symbol is multiplied by CAZAC sequence having a length of 12. A cyclic shift of a sequence may be changed between a symbol and a sot. Orthogonal covering is used for a reference signal (RS).

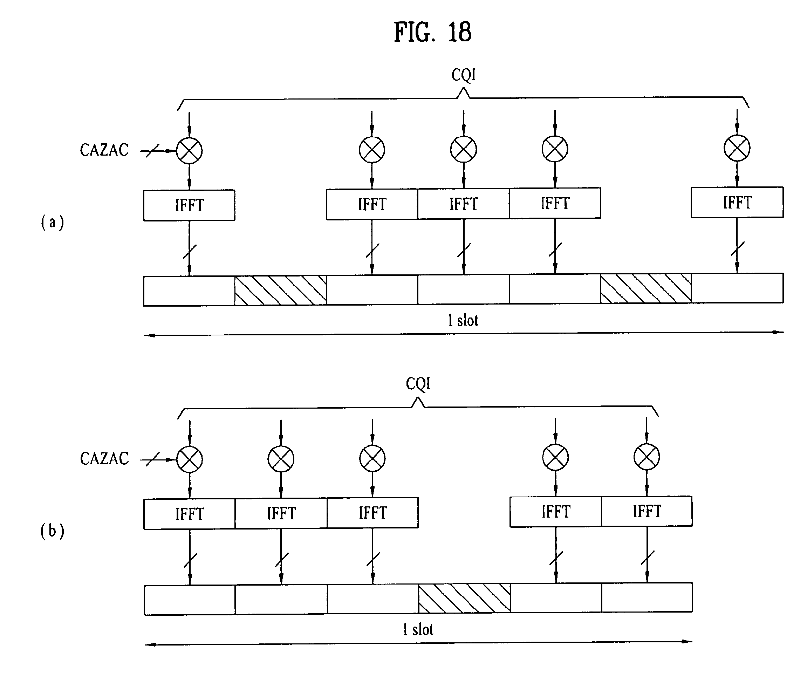

FIG. 18 is a diagram for a channel structure of CQI information bits. First of all, CQI information bits may include at least one or more fields. For instance, CQI field indicating CQI index to determine MCS, PMI field indicating an index of a precoding matrix in a codebook, RI field indicating a rank and the like may be included in the CQI information bits.

Referring to FIG. 18 (a), a reference signal (RS) is carried on 2 SC-FDMA symbols spaced apart from by an interval of 3 SC-FDMA symbols in 7 SC-FDMA symbols included in one slot, while CQI information is carried on the 5 remaining SC-FDMA symbols. Two reference signals (RSs) are used within one slot to support a high-speed user equipment. Each user equipment may be identifiable using a sequence. CQI information symbols are modulated and delivered to all SC-FDMA symbols. And, SC-FDMA symbols include one sequence. In particular, a user equipment modulates and transmits CQI with each sequence.

The number of symbols transmittable in one TTI is 10 and modulation of CQI information is determined up to QPSK. When QPSK mapping is used for SC-FDMA symbol, since 2-bit CQI value may be carried, 10-bit CQI value may be carried on one slot. Hence, maximum 20-bit CQI value may be carried on one subframe. In order to spread CQI information, a frequency domain spread code is used.

CAZAC sequence (e.g., ZC sequence) may be used as a frequency domain spread code. Moreover, another sequence having good correlation property may be applied as a frequency domain spread code. In particular, each control channel may be identifiable in a manner of applying CAZAC sequence having a different cyclic shift value. IFFT is performed on the frequency-domain-spread CQI information.

FIG. 18 (b) shows an example of PUCCH format 2/2a/2b transmission in case of an extended CP. One slot includes 6 SC-FDMA symbols. RS is carried on one of 6 OFDM symbols of each slot and CQI information bit is carried on the remaining 5 OFDM symbols. Except this, the former example of the case of the normal CP shown in FIG. 18 (a) is exactly applied to the case of the extended CP.

Orthogonal covering used for the RS shown in FIG. 18 (a) or FIG. 18 (b) is shown in Table 5.

[Table 5]

| Normal CP | Extended CP |
|-----------|-------------|
| [1 1]     | [1]         |

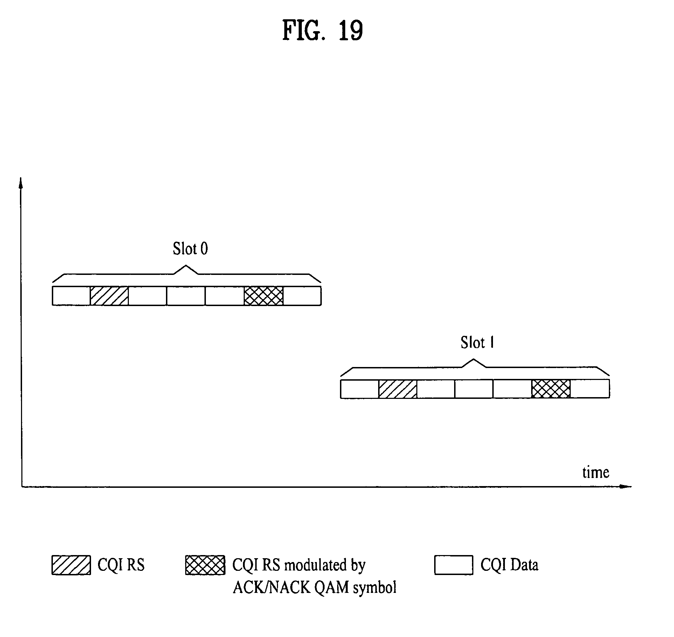

Simultaneous transmission of CQI information and ACK/NACK information is described with reference to FIG. 19 as follows.

First of all, in case of a normal CP, it may be able to simultaneously transmit CQI information and ACK/NACK information using PUCCH format 2a/2b. The ACK/NACK information may be carried on the symbol that carries the aforesaid CQI RS shown in FIG. 19. In particular, in case of the normal CP, a 2nd RS is modulated into ACK/NACK symbol. In case that ACK/NACK symbol is modulated by BPSK scheme like PUCCH format 1a, CQI RS is modulated into ACK/NACK symbol by BPSK scheme. In case that ACK/NACK symbol is modulated by QPSK scheme like PUCCH format 1b, CQI RS is modulated into ACK/NACK symbol by QPSK scheme. Meanwhile, in case of an extended CP, CQI information and ACK/NACK information are simultaneously transmitted using PUCCH format 2. For this, CQI information and ACK/NACK information are joint-coded.

In addition to the above description, standard documents (e.g., 3GPP TS36.211, etc.) for PUCCH may be further referred to and details thereof are omitted for clarity of the description. Yet, it is apparent that contents disclosed in the standard documents are applicable to the PUCCH used for various embodiments of the present invention described in the following.

Channel Measurement

A DL signal or channel measuring operation performed by a user equipment may be mainly classified into a 3rd layer (L3) channel measurement operation and a 2nd layer (L2) channel measurement operation. In the following description, the L3 channel measurement and the L2 channel measurement are explained in detail.

L3 Channel Measurement

In L3 channel measurement, a measurement in a 1st layer (L1) may be initiated under the control of an upper layer (e.g., a 3rd layer (L3)). This measurement operation may be performed in RRC_CONNECTED state or RRC_IDLE state. The RRC_CONNECTED state is the state in which a connection between a base station and a user equipment exists. In the RRC_CONNECTED state, the user equipment performs a measurement operation by receiving an RRC connection reconfiguration message sent by the base station and may be then able to send a measurement report message containing a result of the measurement operation to the base station. In the RRC connection reconfiguration message, a measurement ID and type, a command (e.g., set, modify, cancel, etc.), a measurement target, a measurement quantity, reporting quantities, a reporting reference (e.g., periodic or event trigger scheme, etc.) and the like may be contained. On the other hand, the RRC_IDLE state is the state in which a connection between a base station and a user equipment does not exist. In the RRC_IDLE state, the user equipment receives elements, which are necessary for the measurement and broadcasted as system information, and may be then able to perform a measurement operation. In each of the RRC_CONNECTED state and the RRC_IDLE state, an intra-frequency measurement, an inter-frequency measurement and an inter-Radio Access Technology (inter-RAT) measurement can be performed.

According to the L3 channel measurement in a user equipment (UE), RSRP (Reference Signal Received Power), RSRQ (Reference Signal Received Quality), UTRA FDD (Frequency Division Duplex) CPICH (Common Pilot Channel) RSCP (Received Signal Code Power), UTRA FDD carrier RSSI (Received Signal Strength Indicator), UTRA FDD CPICH Ec/No (Energy Chip per Noise), GSM carrier RSSI, UTRA TDD carrier RSSI, UTRA TDD P-CCPCH (Primary Common Control Physical Channel) RSCP, CDMA2000 1x RTT (Radio Transmission Technology) Pilot Strength and CDMA2000 HRPD(High Rate Packet Data) Pilot Strength are defined.

The RSRP is defined as a linear average of power of a resource element that carries a cell-specific reference signal (CRS) in a measured frequency bandwidth. A user equipment may be able to determine the RSRP by detecting a cell-specific reference signal (CRS) transmitted by being mapped to a specific resource element. For the RSRP calculation, a cell-specific reference signal ($R_0$) for antenna port 0 may be basically usable. If the user equipment is able to reliably detect a cell-specific reference signal ($R_1$) for antenna port 1, it may be able to determine the RSRP using $R_1$ in addition to $R_0$. Details of the cell-specific reference signal may refer to the standard document (e.g., 3GPP TS36.211). In the 3GPP LTE-A system evolved from the conventional 3GPP LTE, a reference signal (i.e., CSI-RS) for a channel status information (CSI) measurement may be additionally defined. In this case, a user equipment may be able to use CSI-RS for RSRP measurement.

RSRQ is defined as a value resulting from by dividing a value, which is calculated by multiplying the number of resource blocks in a frequency bandwidth measured in RSRP, by 'E-UTRA carrier RSSI' [i.e., RSRQ = N x RSRP / (E-UTRA carrier RSSI)]. The numerator 'N $\times$ RSRP' and the denominator 'E-UTRA carrier RSSI' are measured for the same resource block set. In this case, the 'E-UTRA carrier RSSI' includes a linear average of total reception power measured by a user equipment only on OFDM symbols containing reference symbol for antenna port 0 on a measured bandwidth, across N resource blocks, in signals from all sources including a common-channel serving cell, a common-channel non-serving cell, a neighbor channel interference, thermal noise and the like.

'UTRA FDD CPICH RSCP' is defined as a reception power of one code measured on Primary CPICH.

'UTRA FDD carrier RSSI' is defined as a received wideband power, which includes noise and thermal noise generated from a receiver, within a bandwidth defined by a receiver pulse forming filter.

'UTRA FDD CPICH Ec/No' is a value measured on Primary CPICH and is defined as a value resulting from dividing a reception energy per chip by a power density on a corresponding band.

'GSM carrier RSSI' is a value measured for GSM BCCH carrier and is defined as a wideband received power within a related channel bandwidth in calculating RSSI.

'UTRA TDD carrier RSSI' is defined as a received wideband power, which includes noise and thermal noise generated from a receiver, within a bandwidth defined by a receiver pulse forming filter in a specific time slot.

'UTRA TDD P-CCPCH RSCP' is defined as a reception power on P-CCPCH of a neighbor UTRA TDD cell in calculating RSCP.

'CDMA2000 1x RTT pilot strength' is defined as a reception strength of a pilot signal in CDMA2000 1x transmission.

'CDMA2000 1x HPRD pilot strength' is defined as a reception strength of a pilot signal in CDMA2000 HPRD transmission.

Meanwhile, in the L3 channel measurement in E-UTRAN, a downlink reference signal transmission power (DL RS TX power), a received interference power and a thermal noise power are defined.

The DL, RS TX power' is determined by a cell as a linear average of power of resource element carrying a cell-specific reference signal transmitted by a base station (eNB) within an operating system bandwidth.

The 'received interference power' is defined as a power of interference received in UL including thermal noise within a bandwidth of one resource element amounting to the number of subcarriers per resource block.

The 'thermal noise power' is defined as UL thermal noise within a UL system bandwidth configured with resource blocks amounting to the number of resource blocks defined in UL.

In addition to the above description, standard documents (e.g., 3GPP TS36.211, etc.) for the L3 channel measurement may be further referred to and details thereof are omitted for clarity of the description. Yet, it is apparent that L3 channel measurement relevant contents disclosed in the standard documents are applicable to the L3 channel measurement used for various embodiments of the present invention described in the following.

L2 Channel Measurement

Compared to the above-described L3 channel measurement in the user equipment relates to measurement and reporting of a reception strength or quality on a long-term DL channel, the L2 channel measurement described in the following relates to measurement and reporting of a reception strength or quality on a DL channel at a specific timing point. And, the L2 channel measurement result may be represented as channel status information (CSI).

In order to correctly perform MIMO scheme, a receiving end may be able to feed back a rank indicator (RI), a precoding matrix index (PMI) and a channel quality indicator (CQI) to a transmitting end. The RI, PMI and CQI may be named channel status information (CSI). Alternatively, it may be able to use a terminology 'CQI' as a concept of channel information including RI, PMI and CQI.

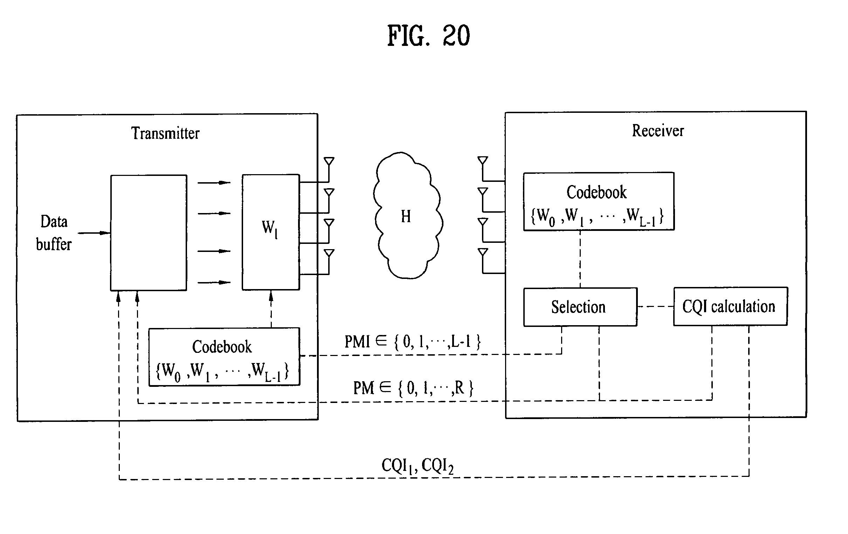

FIG. 20 is a diagram to illustrate feedback of channel status information.

Referring to FIG. 20, MIMO transmission from a transmitter may be received by a receiver on a channel H. The receiver selects a preferred precoding matrix from a codebook based on a received signal and may be then able to feed back a precoding matrix index (PMI) of the selected precoding matrix to the transmitter. And, the receiver calculates channel quality information (CQI) by measuring a signal-to-interference plus noise ratio (SINR) of the received signal and the like and may be then able to feed back the calculated channel quality information to the transmitter. Using the RI and CQI information fed back from the receiver, the transmitter may be able to determine the number of layers, time/ frequency resources, modulation and coding scheme (MCS) and the like appropriate for the data transmission to the receiver. And, the transmitter may be able to transmit a precoded transmission signal via a plurality of antennas using

a precoding matrix $W_1$ indicated by the PMI fed back from the receiver.

In the following description, the channel status information is explained in detail.

First of all, the RI is the information on a channel rank (i.e., the number of layers used for a transmission from a transmitter). The RI is determined on the basis of the number of allocated transmission layers and may be acquired from a related downlink control information (DCI).

The PMI is the information on a precoding matrix used for a transmission from a transmitter. A precoding matrix fed back from a receiver is determined in consideration of the number of layers indicated by the RI. The PMI may be fed back in case of a closed-loop spatial multiplexing (SM) and large delay CDD transmission. In case of an open-loop transmission, a transmitter may be able to select a precoding matrix by a predetermined rule. A process for a receiver to select a PMI for each rank is described as follows. First of all, the receiver calculates an SINR previously processed for each PMI, converts the calculated SINR to a sum capacity, and is then able to select a best PMI based on the sum capacity. In particular, the process for the receiver to calculate the PMI may correspond to the process for finding a best PMI based on the sum capacity. Having the PMI fed back from the receiver, the transmitter may use a precoding matrix recommended by the receiver as it is. Alternatively, the transmitter may have this fact contained in a scheduling assignment information of a data transmission to the receiver as 1-bit indicator. Alternatively, the transmitter may not use a precoding matrix indicated by the PMI fed back from the receiver as it is. Precoding matrix information used by the transmitter for the data transmission to the receiver may be explicitly contained in the scheduling assignment information. Details for the PMI may refer to the 3GPP standard documents (e.g., 3GPP TS36.211).

The CQI is the information indicating a channel quality. The CQI may be represented as a predetermined MCS combination. And, CQI index may be given as Table 6 in the following.

[Table 6]

| CQI index | modulation | code rate x 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

Referring to Table 6, CQI index is represents as 4 bits (i.e., CQI indexes 0 to 15) and each CQI index indicates a corresponding modulation scheme and code rate.

A CQI calculating method is described as follows. First of all, in the 3GPP standard document (e.g., 3GPP TS36.213), it is defined that a user equipment considers the following assumptions in calculating a CQI index.

(1) First 3 OFDM symbols of one subframe are occupied by control signaling.

(2) No resource element used by a primary synchronization signal, a secondary synchronization signal or a physical broadcast channel (PBCH)

(3) CP length of non-MBSFN subframe

(4) Redundancy version is 0.

(5) PDSCH transmission scheme follows a transmission mode (or default mode) currently set for a user equipment.

(6) A radio of PDSCH EPRE (energy per resource element) to cell-specific reference signal EPRE is given with an exception of $\rho_A$ (particularly, $\rho_A$ may follow the assumption below. First of all, for a random modulation scheme, if a user equipment is set to a transmission mode 2 of 4 cell-specific antenna port configuration or a transmission mode 3 having a related RI set to 1 with 4 cell-specific antenna port configuration, it is '$\rho_A = P_A + \Delta_{offset}$ [dB]'. $\Delta_{offset}$ is given by *nomPDSCH-RS-EPRE-Offset* parameter set by higher layer signaling.).

The definition of the above assumptions means that CQI contains various kinds of informations on a corresponding user equipment as well as information on a channel quality. In particular, since a different CQI index may be fed back in accordance with performance of a corresponding user equipment despite the same channel quality, uniform references are defined.

A user equipment receives a DL reference signal (RS) from a base station and is then able to recognize a status of a channel via the received reference signal. In this case, the reference signal may include a common reference signal (CRS) defined by the conventional 3GPP LTE system or a CSI-RS (channel status information reference signal) defined in the system having an extended antenna configuration (e.g., 3GPP LTE-A system). The user equipment may be able to calculate a CQI index having a block error rate not exceed 10 % while meeting the assumption given for the CQI calculation on the channel recognized via the reference signal. The user equipment may be able to transmit the calculated index to the base station. In calculating the CQI index, the user equipment does not apply a method of improving interference estimation.

A process for a user equipment to obtain a status of a channel and to find an appropriate MCS may be designed in various ways in aspect of user equipment implementation. For instance, a user equipment is able to calculate a channel status or a valid SINR (signal-to-interference plus noise ratio) using a reference signal. The channel status or the valid SINR may be measured on a whole system bandwidth (e.g., named a set S) or a partial bandwidth (e.g., specific subband or specific RB). The CQI for the whole system bandwidth (set S) may be named a wideband (WB) CQI, while the CQI for the partial band may be named a subband (SB) CQI. The user equipment may be able to find a highest MCS based on the calculated channel status or the calculated valid SINR. In this case, the highest MCS may mean the MCS that meets the assumption for the CQI calculation by having a transport block error rate not exceed 10 % in decoding. The user equipment determines a CQI index related to the found MCS and may be then able to report the determined CQI index to a base station.

Meanwhile, it may be able to consider a case that a user equipment transmits CQI only [CQI-only transmission]. This corresponds to a case that CQI is transmitted aperiodically without data on PUSCH. This aperiodic CQI transmission may be performed in response to a request made by a base station on the basis of event triggering. This request from the base station may include a CQI request defined as 1 bit on a downlink control information (DCI) format 0. Moreover, for the CQI-only transmission, MCS index ($I_{MCS}$) 29 in Table 7 may be signaled. In doing so, CQI request bit of the DCI format 0 is set to 1, a transmission under 4 RB is set up, a redundancy version 1 (RV1) is indicated in PUSCH data retransmission, and a modulation order $Q_m$ may be set to 2. In particular, in case of the CQI-only transmission, it may be able to use QPSK as a modulation scheme only.

[Table 7]

| MCS Index $I_{MCS}$ | Modulation Order $Q_m$ | TBS Index $I_{TBS}$ | Redundancy Version $rv_{idx}$ |
|---|---|---|---|
| 0 | 2 | 0 | 0 |
| 1 | 2 | 1 | 0 |
| 2 | 2 | 2 | 0 |
| 3 | 2 | 3 | 0 |
| 4 | 2 | 4 | 0 |
| 5 | 2 | 5 | 0 |
| 6 | 2 | 6 | 0 |
| 7 | 2 | 7 | 0 |
| 8 | 2 | 8 | 0 |
| 9 | 2 | 9 | 0 |
| 10 | 2 | 10 | 0 |

(continued)

| MCS Index $I_{MCS}$ | Modulation Order $Q_m$ | TBS Index $I_{TBS}$ | Redundancy Version $rv_{idx}$ |
|---|---|---|---|
| 11 | 4 | 10 | 0 |
| 12 | 4 | 11 | 0 |
| 13 | 4 | 12 | 0 |
| 14 | 4 | 13 | 0 |
| 15 | 4 | 14 | 0 |
| 16 | 4 | 15 | 0 |
| 17 | 4 | 16 | 0 |
| 18 | 4 | 17 | 0 |
| 19 | 4 | 18 | 0 |
| 20 | 4 | 19 | 0 |
| 21 | 6 | 19 | 0 |
| 22 | 6 | 20 | 0 |
| 23 | 6 | 21 | 0 |
| 24 | 6 | 22 | 0 |
| 25 | 6 | 23 | 0 |
| 26 | 6 | 24 | 0 |
| 27 | 6 | 25 | 0 |
| 28 | 6 | 26 | 0 |
| 29 | reserved | | 1 |
| 30 | | | 2 |
| 31 | | | 3 |

A channel quality information reporting operation is described in detail as follows.

First of all, in the 3GPP LTE system, when a DL reception entity (e.g., a user equipment) is connected with a DL transmission entity (e.g., a base station), the DL reception entity performs measurement on a reference signal received power (RSRP) of a reference signal transmitted in DL, a quality of a reference signal (RSRQ: reference signal received quality) and the like at a random time and a corresponding measurement result may be reported to the base station periodically or on the basis of event triggering.

In a cellular OFDM radio packet communication system, each user equipment reports a DL channel information in accordance with a DL channel status via uplink. A base station may be then able to determine time/frequency resources, MCS (modulation and coding scheme) and the like appropriate for a data transmission to each user equipment using the DL channel information received from the each user equipment.

In case of the conventional 3GPP LTE system (e.g., 3GPP Release-8 system), this channel information may include CQI (Channel Quality Indication), PMI (Precoding Matrix Indicator) and RI (Rank Indication). In particular, the CQI, PMI and RI may be transmitted entirely or partially in accordance with a transmission mode of each user equipment. CQI is determined based on a received signal quality of a user equipment, which may be generally determined on the basis of a measurement of a DL reference signal. In doing so, a CQI value actually delivered to a base station may correspond to an MCS capable of providing maximum performance by maintaining a block error rate (BLER) under 10 % in the received signal quality measured by a user equipment.

This channel information reporting may be classified into a periodic reporting transmitted periodically and an aperiodic reporting transmitted in response to a request made by a base station.

In case of the aperiodic reporting, it is set for each user equipment by a 1-bit request bit (CQI request bit) contained in UL scheduling information downloaded to a user equipment by a base station. Having received this information, each user equipment may be then able to deliver channel information to the base station via a physical uplink shared channel (PUSCH) in consideration of its transmission mode. And, it may be able to set RI and CQI/PMI not to be transmitted on the same PUSCH.

In case of the periodic reporting, a period for transmitting channel information via a higher layer signal, an offset in the corresponding period and the like are signaled to each user equipment by subframe unit and channel information in consideration of a transmission mode of each user equipment may be delivered to a base station via a physical uplink control channel (PUCCH) in accordance with a determined period. In case that data transmitted in uplink simultaneously exists in a subframe in which channel information is transmitted by a determined period, the corresponding channel information may be transmitted together with the data not on the physical uplink control channel (PUCCH) but on a physical uplink shared channel (PUSCH). In case of the periodic reporting via PUCCH, bits limited more than those of the PUSCH may be used. RI and CQI/PMI may be transmitted on the same PUSCH.

In case that the periodic reporting and the aperiodic reporting collide with each other in the same subframe, only the aperiodic reporting can be performed.

In calculating WB CQI/PMI, a most recently transmitted RI may be usable. RI in a PUCCH reporting mode is independent from RI in a PUSCH reporting mode. The RI in the PUSCH reporting mode is valid for CQI/PMI in the corresponding PUSCH reporting mode only.

CQI/PMI/RI feedback types for the PUCCH reporting mode may be classified into 4 types. Type 1 is a CQI feedback for a subband selected by a user equipment. Type 2 includes a WB CQI feedback and a WB PMI feedback. Type 3 is an RI feedback. Type 4 is a WB CQI feedback.

Referring to Table 8, in the periodic reporting of channel information, there are 4 kinds of reporting modes (mode 1-0, mode 1-2, mode 2-0 and mode 2-1) in accordance with CQI and PMI feedback types.

[Table 8]

| | | PMI Feedback Type | |
| --- | --- | --- | --- |
| | | **No PMI (OL, TD, single-antenna)** | **Single PMI (CL)** |
| **CQI Feedback Type** | **Wideband** | **Mode 1-0**<br>- RI (only for Open-Loop SM)<br>- One Wideband CQI (4bit)<br><br>when RI>1, CQI of first codeword | **Mode 1-1**<br>- RI<br>- Wideband CQI (4bit)<br>Wideband spatial CQI (3bit) for RI>1<br>Wideband PMI (4bit) |
| | **UE Selected** | **Mode 2-0**<br>- RI (only for Open-Loop SM)<br>- Wideband CQI (4bit)<br>- Best- CQI (4bit) in each BP<br>Best-1 indicator(L-bit label)<br><br>when RI>1, CQI of first codeword | **Mode 2-1**<br>- RI<br>- Wideband CQI (4bit)<br>Wideband spatial CQI (3bit) for RI>1<br>Wideband PMI (4bit)<br>- Best-1 CQI (4bit) 1 in each BP<br>Best-1 spatial CQI (3bit) for RI>1l<br>Best-1 indicator (L-bit label) |

CQI can be classified into WB (wideband) CQI and SB (subband) CQI in accordance with CQI feedback type and PMI can be classified into No PMI and Single PMI in accordance with a presence or non-presence of PMI transmission. In Table 8, No PMI corresponds to a case of open-loop (OL), transmit diversity (TD) and single-antenna, while Single PMI corresponds to a case of closed-loop (CL).

The mode 1-0 corresponds to a case that WB CQI is transmitted in the absence of PMI transmission. In this case, RI is transmitted only in case of open-loop (OL) spatial multiplexing (SM) and one WB CQI represented as 4 bits can be transmitted. If RI is greater than 1, CQI for a 1st codeword can be transmitted. In the mode 1-0, the feedback type 3 and the feedback type 4 mentioned in the foregoing description can be multiplexed and transmitted at different timings within the set reporting period [Channel information transmission of TDM (time division multiplexing) type].

The mode 1-1 corresponds to a case that a single PMI and WB CQI are transmitted. In this case, 4-bit WB CQI and 4-bit WB PMI can be transmitted together with RI transmission. Additionally, if RI is greater than 1, 3-bit WB (wideband) spatial differential CQI can be transmitted. In 2-codeword transmission, the WB spatial differential CQI may indicate a difference value between a WB CQI index for codeword 1 and a WB CQI index for codeword 2. The difference value in-between may have a value selected from a set {-4, -3, -2, -1, 0, 1, 2, 3} and can be represented as 3 bits. In the mode 1-1, the feedback type 2 and the feedback type 3 mentioned in the foregoing description can be multiplexed and transmitted at different timings within the set reporting period.

The mode 2-0 corresponds to a case that CQI on a UE-selected band is transmitted in the absence of PMI transmission. In this case, RI is transmitted only in case of open-loop spatial multiplexing (SM) and a WB CQI represented as 4 bits may be transmitted. A best CQI (best-1) is transmitted on each bandwidth part (BP) and the best-1 CQI may be represented as 4 bits. And, an L-bit indicator indicating the best-1 may be transmitted together. If the RI is greater than 1, a CQI for a 1st codeword can be transmitted. In the mode 2-0, the feedback type 1, the feedback type 3 and the feedback type 4 mentioned in the foregoing description can be multiplexed and transmitted at different timings within the set reporting period.

And, the mode 2-1 corresponds to a case that a single PMI and a CQI on a UE-selected band are transmitted. In this case, together with RI transmission, 4-bit WB CQI, 3-bit WB spiral differential CQI and 4-bit WB PMI can be transmitted. Additionally, 4-bit best-1 CQI is transmitted on each bandwidth part (BP) and L-bit best-1 indicator can be transmitted together. Additionally, if RI is greater than 1, 3-bit best-1 spatial differential CQI can be transmitted. In 2-codeword transmission, it may indicate a difference value between a best-1 CQI index of codeword 1 and a best-1 CQI index of codeword 2. In the mode 2-1, the feedback type 1, the feedback type 2 and the feedback type 3 mentioned in the foregoing description can be multiplexed and transmitted at different timings within the set reporting period.

In a UE-selected SB CQI reporting mode, a subband size of the bandwidth part (BP) may be defined as Table 9.

[Table 9]

| System Bandwidth $N_{RB}^{DL}$ | Subband Size k (RBs) | Bandwidth Parts ($J$) |
|---|---|---|
| 6-7 | NA | NA |
| 8-10 | 4 | 1 |
| 11-26 | 4 | 2 |
| 27-63 | 6 | 3 |
| 64-110 | 8 | 4 |

Table 9 shows a setting of a bandwidth part (BP) and a subband size in each BP in accordance with a size of a system bandwidth. A user equipment selects a preferred subband from each BP and may be then able to calculate CQI for the corresponding subband.

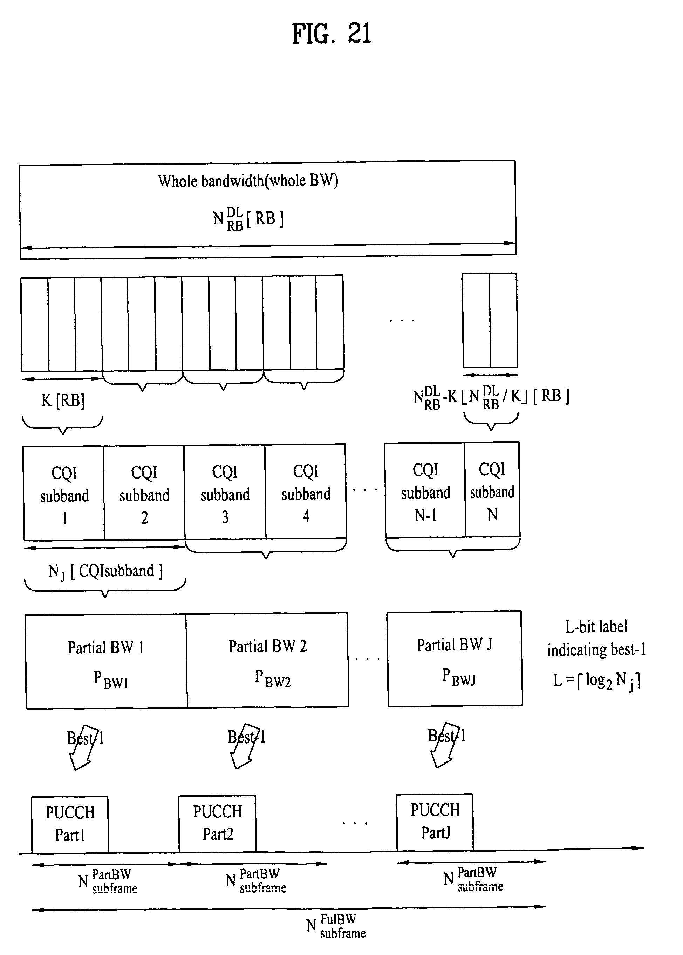

FIG. 21 is a diagram to illustrate one example of a CQI reporting mode.

$N_{RB}^{DL}$ Indicates the number of RBs of a whole bandwidth. The whole bandwidth may be divided into N (1, 2, 3, ... N) CQI subbands. One CQI subband may include k RBs defined in Table 9. If the number of RBs of the whole bandwidth is not a multiple integer of k, the number of RBs configuring a last (i.e., $N^{th}$) CQI subband may be determined by Formula 14.

[Formula 14]

$$N_{RB}^{DL} - k \cdot \lfloor N_{RB}^{DL}/k \rfloor$$

In Formula 14, $\lfloor \rfloor$ indicates a floor operation and $\lfloor x \rfloor$ floor (x) means a maximum integer not exceeding x.

Moreover, $N_J$ CQI subbands configure one bandwidth part (BP) and a whole bandwidth can be divided into J BPs. A user equipment calculates a CQI index for a preferred best one (best-1) CQI band in one BP and may be then able to transmit the CQI index on PUCCH. In doing so, a best-1 indicator indicating what is the best-1 CQI subband selected from one BP may be transmitted together. The best-1 indicator may be configured with L bits, where the 'L' can be represented as Formula 15.

[Formula 15]

$$L = \lceil \log_2 N_J \rceil$$

In Formula 15, $\lceil \ \rceil$ indicates a ceiling operation and $\lceil x \rceil$ or a ceiling(x) means a minimum integer not smaller than x.

In the above UE-selected CQI reporting mode, it may be able to determine a frequency band in which a CQI index is calculated. In the following description, a CQI transmission period is explained.

First of all, each user equipment may be able to receive information including a combination of a transmission period of channel information and an offset from a higher layer by RRC signaling. The user equipment may be able to transmit the channel information to a base station based on the provided information on the channel information transmission period.

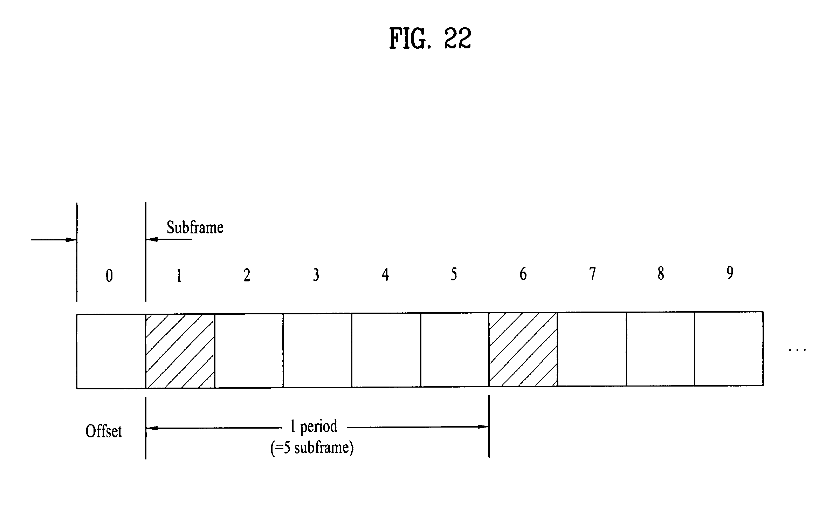

FIG. 22 is a diagram for one example of a scheme for a user equipment to periodically transmit channel information. For instance, in case that a user equipment receives information on a combination indicating that a transmission period of channel information is 5 and that an offset is 1, the user equipment transmits the channel information by unit of 5 subframes in a manner of transmitting the channel information via PUCCH by leaving one subframe offset in direction that a subframe index is increasing with reference to $0^{th}$ subframe. In this case, an index of subframe may include a combination of a system frame number ($n_f$) and 20 slot indexes ($n_s$, 0 ~ 19) within a system frame. Since one subframe is constructed with 2 slots, a subframe index may be represented as '$10 \times n_f +$ floor ($n_s/2$)'.

In accordance with a CQI feedback type, there is a type of transmitting WB CQI only or a type of transmitting both WB CQI and SB CQI. In case of the type of transmitting WB CQI only, WB CQI information on a whole band is transmitted in a subframe corresponding to each CQI transmission period. The transmission period of WB periodic CQI feedback may be set to {2, 5, 10, 16, 20, 32, 40, 64, 80, 160} ms or 'no transmission'. In this case, if PMI needs to be transmitted as well in accordance with a PMI feedback type in Table 8, PMI information is transmitted together with CQI information. In case of the type of transmitting both WB CQI and SB CQI, it may be able to transmit the WB CQI and the SB CQI alternately.

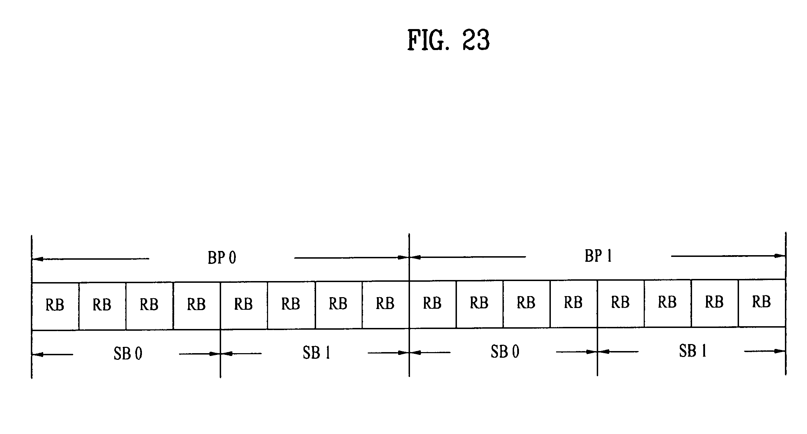

FIG. 23 is a diagram for one example of a type of transmitting both WB CQI and SB CQI. In FIG. 23, a system including 16 resource blocks (RBs) is shown for example. In case of a system having a system frequency band include 16 RBs, for example, assume that the frequency band may include 2 bandwidth parts (BPs) BP0 and BP1, that each of the BPs may include 2 subbands (SBs) SB0 and SB1, and that each of the SBs includes 4 RBs. In this case, as mentioned in the foregoing description with reference to Table 9, the number of BPs and a size of each SB are determined in a manner of depending on the number of RBs that construct a whole system band. And, it may be able to determine how many SBs are used to configure each BP in accordance with the number of RBs, the number of BPs and a size of SB.

In case of the type of transmitting both WB CQI and SB CQI, a WB CQI is transmitted in a CQI transmission subframe, a CQI for SB0 or SB1 (i.e., best-1) corresponding to an SB having a better channel status in BP0 and an index (i.e., best-1 indicator) of the corresponding SB are transmitted in a $1^{st}$ next transmission frame, and a CQI for SB0 or SB1 (i.e., best-1) corresponding to an SB having a better channel status in BP1 and an index (i.e., best-1 indicator) of the corresponding SB are then transmitted in a $2^{nd}$ next transmission frame. Thus, after the WB CQI has been transmitted, CQI information on each BP is transmitted in order. In doing so, CQI information on a BP between an once-transmitted WB CQI and a WB CQI to be subsequently transmitted can be sequentially transmitted once to 4 times. For instance, in case that CQI information on BP between 2 WB CQIs is transmitted once, transmission can be transmitted in order of 'WB CQI → BP0 CQI → BP1 CQI → WB CQI'. For another instance, in case that CQI information on BP between 2 WB CQIs is transmitted 4 times transmission can be transmitted in order of 'WB CQI → BP0 CQI → BP1 CQI → BP0 CQI → BP1 CQI → BP0 CQI → BP1 CQI → BP0 CQI → BP1 CQI → WB CQI'. Information indicating how many times the CQI for the BP between 2 WB CQIs will be sequentially transmitted is signaled by a higher layer. And, irrespective of WB CQI or SB CQI, the information can be transmitted on PUCCH in a subframe corresponding to information on a combination of a channel information transmission period and an offset, which is signaled by the higher layer exemplarily shown in FIG. 22.

In doing so, in case that PMI needs to be transmitted in accordance with a PMI feedback type, PMI information is transmitted together with CQI information. If PUSCH for a UL data transmission exists in the corresponding subframe, CQI and PMI can be transmitted together with data on PUSCH instead of PUCCH.

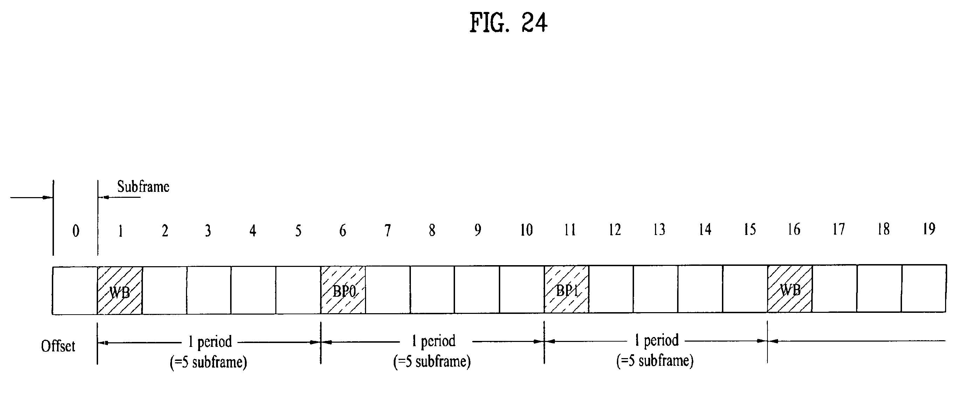

FIG. 24 is a diagram for one example of a CQI transmission scheme in case of transmitting both WB CQI and SB CQI. In particular, FIG. 24 shows one example of a channel information transmitting operation performed by a user equipment if information on a combination of a channel information transmission period '5' and an offset '1' is signaled and information on BP between 2 WB CQI/PMI is sequentially transmitted once, like the example shown in Fig. 22.

Meanwhile, in case of a transmission of RI, the RI may be signaled in combination of information indicating a prescribed multiple number of WB CQI/PMI transmission period and an offset of the corresponding transmission period. In this case, the offset may be defined an offset relative to a CQI/PMI transmission offset. For instance, if an offset of CQI/PMI transmission period is 1 and an offset of transmission period of RI is 0, it means that the offset of the RI transmission period is equal to the offset of the CQI/PMI transmission period. And, the offset of the RI transmission period can be defined as 0 and a negative value.

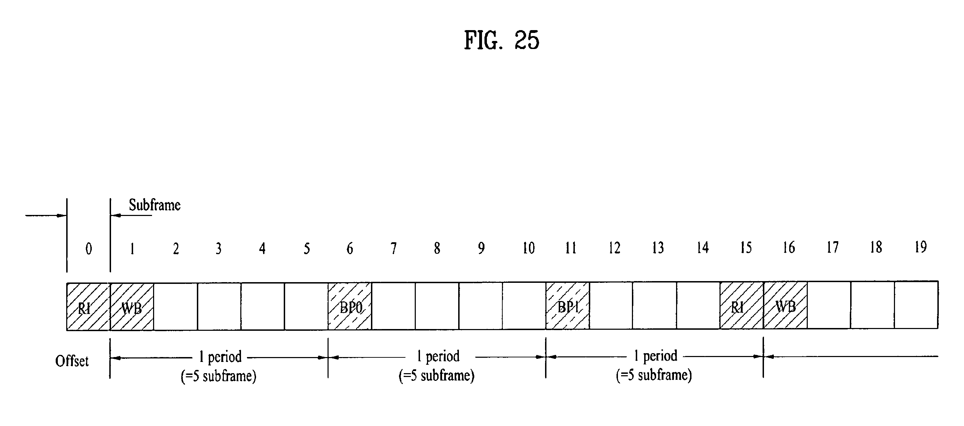

When the CQI/PMI transmission shown in Fig. 24 is set up, FIG. 25 shows one example of a case that an RI transmission period amounts to a 1-time multiple of a WB CQI/PMI transmission period and that an offset of the RI transmission period is -1. Since the RI transmission period amounts to a 1-time multiple of the WB CQI/PMI transmission period, the RI transmission period has the same period of the WB CQI/PMI transmission period. Since the RI offset value '-1' means to have the value of '-1' relative to the CQI offset '1' shown in FIG. 24, RI may be transmitted with reference to a subframe index #0.

In case that an RI transmission overlaps with a WB CQI/PMIT transmission or an SB CQI/PMI transmission, it may be able to drop the WB CQI/PMI or the SB CQI/PMI. For instance, if an offset of RI is not '-1' but '0', a transmission subframe of the WB CQI/PMI overlaps with that of the SB CQI/PMI. If so, the WB CQI/PMI is dropped and the RI can be transmitted.

According to the above-mentioned combination, it may be ale to transmit CQI, PMI and RI. And, these informations may be transmitted to each user equipment by RRC signaling of a higher layer. A base station may be able to transmit information appropriate for each user equipment in consideration of a channel status of each user equipment and a user equipment distributed situation within the base station.

Meanwhile, SB CQI, WB CQI/PMI and RI for a reporting type on PUCCH and a payload size for WB CQI may be set as shown in Table 10.

[Table 10]

| PUCCH Retort Type | Reported | Mode State | PUCCH Reporting Modes | | | |
|---|---|---|---|---|---|---|
| | | | Mode 1-1 | Mode 2-1 | Mode 1-0 | Mode 2-0 |
| | | | (bits/BP) | (bits/BP) | (bits/BP) | (bits/BP) |
| 1 | Sub-band CQI | RI=1 | NA | 4+L | NA | 4+L |
| | | RI>1 | NA | 7+L | NA | 4+L |
| 2 | Wideband CQI/PMI | 2 TX Antennas RI = 1 | 6 | 6 | NA | NA |
| | | 4 TX Antennas RI = 1 | 8 | 8 | NA | NA |
| | | 2 TX Antennas RI > 1 | 8 | 8 | NA | NA |
| | | 4 TX Antennas RI > 1 | 11 | 11 | NA | NA |
| 3 | RI | 2-layer spatial multiplexing | 1 | 1 | 1 | 1 |
| | | 4-layer spatial multiplexing | 2 | 2 | 2 | 2 |
| 4 | Wideband CQI | RI = 1 or RI>1 | NA | NA | 4 | 4 |

In the following description, aperiodic CQI, PMI and RI transmission using PUSCH is explained.

First of all, in case of an aperiodic reporting, RI and CQI/PMI may be transmitted on the same PUSCH. In an aperiodic reporting mode, an RI reporting is only valid for a CQI/PMI reporting in the corresponding aperiodic reporting mode. CQI-PMI combinations supported for all rank values are shown in Table 11.

[Table 11]

| | | PMI Feedback Type | |
|---|---|---|---|
| | | No PMI (OL, TD, single-antenna) | with PMI (CL) |
| PUSCH CQI Feedback Type | Wideband (Wideband CQI) | | Mode 1-2: Multiple PMI<br>- RI<br>- 1st Wideband CQI (4bit)<br>- 2nd Wideband CQI (4bit) if RI>1<br>- subband PMIs on each subband |
| | UE Selected (Subband CQI) | Mode 2-0<br>- RI (only for Open-Loop SM)<br>- Wideband CQI (4bit) + Best-M CQI (2bit)<br>- Best-M index<br><br>when RI>1, CQI of first codeword | Mode 2-2: Multiple PMI<br>- RI<br>- 1st Wideband CQI (4bit) + Best-M CQI(2bit)<br>- 2nd Wideband CQI (4bit) + Best-M CQI(2bit) if RI>1<br>- Wideband PMI + Best-M PMI<br>- Best-M index |
| | Higher layer-configured (subband CQI) | Mode 3-0<br>- RI (only for Open-Loop SM)<br>- Wideband CQI (4bit) + subband CQI (2bit)<br><br>when RI>1, CQI of first codeword | Mode 3-1: Single PMI<br>- RI<br>- 1st Wideband CQI (4bit) + subband CQI (2bit)<br>- 2nd Wideband CQI (4bit) + subband CQI (2bit) if RI>1<br>- Wideband PMI |

Mode 1-2 shown in Table 11 relates to a WB feedback. In the mode 1-2, a preferred precoding matrix for each subband may be selected from a codebook subset on the assumption of a transmission just on the corresponding subband. A user equipment may be able to report one WB CQI only for each codeword. And, the WB CQI can be calculated on the assumption of a transmission on subbands of a whole system bandwidth (set S) and a use of a selected precoding matrix corresponding in each subband. The user equipment may be able to report a PMI selected for each subband. In this case, a subband size may be given as Table 12.

[Table 12]

| System Bandwidth $N_{RB}^{DL}$ | Subband Size ($k$) |
|---|---|
| 6-7 | NA |
| 8-10 | 4 |
| 11-26 | 4 |
| 27-63 | 6 |
| 64-110 | 8 |

Mode 3-0 and mode 3-1 shown in Table 11 relate to a subband feedback configured by a higher layer.

In the mode 3-0, a user equipment may be able to report a WB CQI value calculated on the assumption of a transmission on subbands of a whole system bandwidth (set S). The user equipment may be able to report one subband CQI value for each of the subbands as well. The subband CQI value may be calculated on the assumption of a transmission on a corresponding subband only. Both WB CQI and SB CQI may be able to indicate a channel quality for codeword 1 even if RI > 1.

In the mode 3-1, a single precoding matrix may be selected from a codebook subset on the assumption of a transmission on the subbands of the whole system bandwidth (set S). The user equipment may be able to report one SB CQI value per codeword for each of the subbands. The SB CQI value may be calculated on the assumption of a transmission on a corresponding subband, for which a single precoding matrix is used, among all subbands. The user equipment may be able to report a WB CQI value for each codeword. The WB CQI value may be calculated on the assumption of a transmission on the subbands of a whole system bandwidth (set S) when a single precoding matrix is used for all subbands. The user equipment may be able to report a selected single precoding matrix indicator. The SB CQI value for each codeword may be represented as a difference value from WB CQI using a 2-bit subband differential CQI offset. In particular, the subband differential CQI offset may be defined as a difference value between an SB CQI index and a WB CQI index. And, the subband differential CQI offset may have a value selected from {-2, 0, +1, +2}. Moreover, a subband size may be given as Table 12.

Each of the mode 2-0 and the mode 2-2 shown in Table 11 relates to a UE-selected subband feedback. Each of the mode 2-0 and the mode 2-1 may be schematically described as reporting an average of best-M.

In the mode 2-0, a user equipment may be able to select a set of M preferred subbands (i.e., best-M) within a whole system bandwidth (set S). One subband size is set to k and vales of k and M for each system bandwidth range may be given as Table 13. The user equipment may be able to report one CQI value that reflects a transmission on the above-determined M selected (best-M) subbands only. This CQI value may be able to indicate a channel quality for codeword 1 even if RI > 1. The user equipment may be able to report a WB CQI value calculated on the assumption of a transmission on subbands of a whole system bandwidth (set S). This WB CQI may be able to indicate a channel quality for codeword 1 even if RI > 1.

[Table 13]

| System Bandwidth $N_{\mathrm{RB}}^{\mathrm{DL}}$ | Subband Size k (RBs) | *M* |
|---|---|---|
| 6-7 | NA | NA |
| 8-10 | 2 | 1 |
| 11- 26 | 2 | 3 |
| 27-63 | 3 | 5 |
| 64-110 | 4 | 6 |

In the mode 2-2, a user equipment selects a set (i.e., best-M) of M preferred subbands among subbands of a whole system bandwidth (set S) [cf. one subband size is k] and may be also able to select a preferred single precoding matrix from a codebook subset that will be used for a transmission on the selected M subbands. The user equipment may be able to report one CQI value per codeword by reflecting the transmission on the selected M subbands only and also reflecting that the same selected single precoding matrix is used on each of M subbands. The user equipment may be able to report an indicator of the selected single precoding matrix selected for the M subbands. A single precoding matrix (i.e., a precoding matrix different from the former precoding matrix for the M selected subbands) may be selected from a codebook subset on the assumption of the transmission on the subbands of the whole system bandwidth (set S). The user equipment may be able to report a WB CQI, which is calculated on the assumption of the transmission on the subbands of the whole system bandwidth (set S) and on the assumption that the single precoding matrix is used on all subbands, for each codeword. The user equipment may be able to report an indicator of the single precoding matrix selected fro all subbands.

For all the UE-selected subband feedback modes (e.g., mode 2-0 and mode 2-2), the user equipment may be able to report positions of M selected subbands using a combinatorial index r. In this case, the 'r' may be defined as Formula 16.

[Formula 16]

$$r = \sum_{i=0}^{M-1} \left\langle \begin{matrix} N - s_i \\ M - i \end{matrix} \right\rangle$$

A set $\left\{ s_i \right\}_{i=0}^{M-1}$ , $(1 \le s_i \le N, \quad s_i < s_{i+1})$ may include M sorted subband indexes. In Formula 16, the $\left\langle \begin{matrix} x \\ y \end{matrix} \right\rangle$ means an extended binomial coefficient that is $\begin{pmatrix} x \\ y \end{pmatrix}$ if x ≥ y or zero if x < y. Hence, the r has a unique label and becomes $r \in \left\{ 0, \cdots, \begin{pmatrix} N \\ M \end{pmatrix} - 1 \right\}$ .

Moreover, CQI value for M selected subbands for each codeword may be represented as a difference value relative to WB CQI. This relative difference value may be represented as a 2-bit differential CQI offset level and may have a value of '(CQI index of M selected subbands) - WB CQI index'. A possible differential CQI value may have one of {+1, +2, +3, +4}.

Moreover, a supported subband size k and the M value may be given as Table 13. Referring to Table 13, the value k and the value M may be given as a function of a system bandwidth.

A label indicating positions of the selected M (best-M) subbands may be represented as L bits, and more particularly, $L = \left\lceil \log_2 \begin{pmatrix} N \\ M \end{pmatrix} \right\rceil$ .

In addition to the above description, standard documents (e.g., 3GPP TS36.211, etc.) for the L2 channel measurement may be further referred to and details thereof are omitted for clarity of the description. Yet, it is apparent that L2 channel measurement relevant contents disclosed in the standard documents are applicable to the L2 channel measurement used for various embodiments of the present invention described in the following.

In a carrier aggregation applied wireless communication system, in order for a cell or a base station (or a relay node as a DL transmission entity) to perform configuration of DL CC and UL CC, it may be necessary to precedently perform a channel measurement on DL CCs and UL CCs configured by the corresponding cell or the base station (or the relay node as the DL transmission entity).

In the following description, a set of active CC defined specific to a corresponding DL reception entity (e.g., a user equipment, a relay node, etc.) in DL shall be represented as 'DL active CC set' and a set of active CC defined specific to a corresponding UL transmission entity (e.g., a user equipment, a relay node, etc.) in UL shall be represented as 'UL active CC set'. The DL/UL active CC set may be represented as DL/UL CCs (or a cell by pairing DL CC and UL CC together) configured by a corresponding UE-specific higher layer (i.e., RRC) or CCs in activation state among DL and UL CCs configured by a higher layer.

Elements related to modification or new setup (or activation/deactivation of a prescribed one of DL/UL CCs configured UE-specific) of the DL/UL active CC set are described as follows.

First of all, a change of received/transmitted traffic of a DL/UL transmitting/receiving entity (e.g., a user equipment or a relay node as a UL transmitting entity, a user equipment or a relay node as a DL receiving entity), i.e., a change of a transmission buffer status may be taken into consideration. Secondly, it may be able to consider a DL channel measured result recognized by a DL transmitting entity (e.g., a cell, a base station, a relay node, etc.) through a channel measurement and feedback of a specific DL transmission by a DL receiving entity (e.g., a user equipment, a relay node, etc.). Thirdly, it may be able to consider a UL channel measured result recognized by a UL receiving entity (e.g., a cell, a base station, a relay node, etc.) through a sounding r3eference signal (SRS) transmitted from a specific UL transmitting entity (e.g., a user equipment, a relay node, etc.), finally, it may be able to consider a carrier configuration reference control information shared as a result of a series of cell-specific (or CC-specific) coordination according to mutual interference estimation by a unit of a specific cell, base station nor relay node.

When a DL/UL active CC set is modified or newly configured in consideration of the above elements, the present invention proposes a channel measuring method and a method of configuring a CC as a target of channel measurement.

For clarity of the following description, a terminology 'cell' is defined to include a cell, a base station or a relay node as a DL transmitting entity or a UL receiving entity. And, a terminology 'user equipment (UE)' is defined to include a user equipment or a relay node as a DL receiving entity or a UL transmitting entity.

Channel Measuring Method

In the following description, a channel measuring method for DL CC is explained first and a UL CC channel measuring method is then explained. The considered channel measuring methods may be considered as channel measuring methods for configuration modification or new setup of DL/UL CC pair in consideration of correlation of activation/deactivation between 'DL active CC set' and 'UL CC active set' or between DL CC and UL CC. For clarity of the following description of the present invention, the configuration modification or new setup of the activation target is described according to classification into a case of DL active CC set and a case of a UL active CC set, which non-limits examples of configuration targets.

As DL channel measurement is required for update, modification or new setup of DL active CC set, one of the following embodiments may be applicable as a DL channel measuring method.

DL Channel Measuring Method 1

The present method relates to using the aforementioned L3 channel measurement. According to the present method, a user equipment may perform L3 channel measurement on a DL channel from a cell and feed back a corresponding result to the cell. The L3 channel measurement result includes information fed back on prescribed PUSCH and may be represented as RSRP (Reference Signal Received Power) or RSRQ (Reference Signal Received Quality). The L3 channel measurement is the result that is driven through a channel measurement on a long-term measurement window and may include information that reflects prescribed long-term channel property. In the following description of the present invention, a measuring scheme represented as L3 measurement or RSRP/RSRQ means the aforementioned DL channel measuring method 1.

DL Channel Measuring Method 2

The present method relates to using the aforementioned L2 channel measurement. According to the present method, a user equipment may perform L2 channel measurement on a DL channel from a cell and feed back a corresponding result to the cell. The L2 channel measurement result includes information fed back on a prescribed PUSCH format 2/2a/2b or a specific control/data multiplexing scheme of PUSCH and may be represented as CQI/PMI/RI (Channel Quality Indicator/Precoding Matrix Index/Rank Indicator). And, the L2 channel measurement result may include all CSI (Channel Status Information) feedback information used for the application of channel-dependent scheduling on a further advanced mobile communication system. For instance, long-term covariance matrix of channel, channel quantized vector, channel eigen vector/matrix and the like may become examples of CSI. In the following description of the present invention, L2 measurement scheme means the aforementioned DL channel measuring method 2.

The L2 measurement becomes a channel measurement information that is fed back in a manner of being measured in period relatively shorter than that of the L3 measurement. The L2 channel measurement information may correspond to a measurement information (called WB (wideband) channel measurement information) on a whole frequency band (set S) in case of MIMO-OFDM system or a channel measurement information (called SB (subband) channel measurement information) on a random one of subbands resulting from dividing a whole frequency band (set S) into an arbitrary number of subbands. In this case, the whole frequency band (set S) means a frequency band configured with all of a prescribed number of subcarriers supported by a system or may mean a specific band designated in part among a prescribed number of subcarriers supported by a system.

DL Channel Measuring Method 3

The present method relates to a method for a user equipment to measure a DL channel and to feed back a corresponding result to a cell, which is different from the aforementioned DL channel measuring method 1 or the aforementioned DL channel measuring method 2 (i.e., which uses a scheme different from the L2 or L3 channel measurement scheme). The present method is a unique channel measuring method optimized for dynamic setup/configuration of a DL active CC set. Examples of a reporting mode or a reporting procedure configurable by the present method are described in detail as follows.

DL Channel Measuring Method 3-1

Since a channel measuring method proposed by the present invention relates to setup/configuration of random DL CC or UL CC), channel measurement information may be embodied into a value measured by CC unit. In order to generate channel measurement information by CC unit, it may be able to basically consider using WB channel measurement information (i.e., channel information according to carrier-wise wideband measurement) with reference to a whole frequency band (set S) described in the L2 measurement (i.e., DL channel measuring method 2).

For the dynamic setup/configuration of a DL active CC set (this may be linked with a setup/configuration of a UL active set as a pair mentioned in the foregoing description) according to the present invention, it may be requested to dynamically set a modification of the DL active CC set or a modification of a DL PDCCH monitoring CC set. For this, a reporting period defined in the conventional L2 measurement scheme (i.e., the WB CQI measurement reporting procedure defined in the 3GPP LTE Release-8 or the 3GPP LTE Release-9) may be inappropriate for the above dynamic CC configuration. In other words, the WB channel measurement information reported by the reporting period set by the conventional L2 measurement scheme may include a channel status information insufficient to be used as a factor of the setup/configuration of the DL active CC set. Accordingly, in case that the dynamic setup/configuration of the DL active CC set of the present invention is applied based on the conventional L2 channel measurement information, it may cause a problem that a channel status of a corresponding CC is not correctly taken into consideration.

Therefore, in order to support the dynamic DL CC setup/configuration (e.g., setup/configuration of DL active CC set or DL PDCCH monitoring CC set), it may be able to consider designating a carrier-wise wideband reporting mode or a UE feedback mode separately. Moreover, it may be able to set a separate reporting period and a start point (or an offset) for a carrier-wise wideband reporting mode proposed by the present invention, which is distinguished from the L2 measurement reporting scheme defined in the conventional system. This separate reporting period and offset for the L2 channel measurement may be named a reporting period and offset defined for L2 channel measurement for CC configuration. The designation of the carrier-wise wideband reporting mode and the configuration of the reporting mode and start point may be applicable together or independently. Although the carrier-wise wideband reporting mode proposed by the present invention to support the dynamic DL CC setup/configuration is basically similar to the conventional L2 WB measurement, it may be defined to differ from the conventional L2 WB measurement in a measurement target, a reporting period and an offset. Accordingly, the present DL channel measuring method 3-1 may be defined as a relative difference value in a parameter for the conventional L2 WB measurement. For example, a period setting for the present channel measurement may be set to a value greater than a settable period of the Le channel measurement for the purpose of the general channel based scheduling.

For UL channels used for a feedback of channel measurement information in the carrier-wise wideband reporting mode, PUCCH and PUSCH used for the conventional L2 measurement may be identically available in aspects of physical channel formats and transmission control information multiplexing.

Meanwhile, it may be able to define a carrier-wise wideband reporting procedure of an aperiodic (or event-triggered) type. This aperiodic reporting scheme may be applicable in parallel with or separately from a periodic type carrier-wise wideband reporting proposed by the present invention.

DL Channel Measuring Method 3-2

Unlike the former DL Channel Measuring Method 3-1, as a channel measuring method for setup/configuration of random DL CC (or UL CC), a PUSCH based L3 measurement may be applicable. In order to generate channel measurement information by CC unit, it may be able to basically consider using L3 measurement such as RSRP and RSRQ explained in the description of the L3 measurement (i.e., DL Channel Measuring Method 1).

For this, the measurement window and reporting period defined by the conventional L3 measurement scheme (i.e., L3 measurement scheme such as RSRP and RSRQ defined by the 3GPP LTE Release-8 or Re-lease-9) may be insufficient for the above-mentioned channel measurement and reporting for the dynamic CC configuration. Therefore, the present invention proposes that separate channel measurement parameters of L3 level are additionally defined to support dynamic DL CC setup/configuration and that a transmission period of the additional parameter is separately set to be applicable to the dynamic DL CC setup/configuration. The separate reporting period for the L3 channel measurement may be named a reporting period defined for the L3 channel measurement for the CC configuration. Alternatively, the present DL channel measuring method 3-2 may be defined as an L3 channel measurement reporting scheme of a type in which a reporting period is modified only in the conventional L3 channel measurement reporting scheme (i.e., defined as a difference value of a reporting period relative to that of the conventional L3 channel measurement). For instance, the settings of a measurement window size and/or reporting period of the present L3 channel measurement may be set smaller than those defined by Rel-8/9 except carrier aggregation.

Meanwhile, it may be able to define an L3 measurement reporting scheme of an aperiodic (or event-triggered) type. This aperiodic reporting scheme may be applicable in parallel with or independently from the periodic type L3 channel measurement report proposed by the present invention.

UL Channel Measuring Method

In the channel measurement for an update, modification or new setup of a UL active CC set, a base station may be able to measure UL channel information through a sounding reference signal (SRS) transmitted by an individual user equipment (i.e., a UL transmitting entity).

When a cell (i.e., a UL receiving entity) performs a UL channel measurement via UL SRS, a user equipment may be able to transmit a wideband SRS to acquire a carrier-wise wideband measurement. In this case, a transmission period of the wideband SRS defined by the conventional SRS transmission scheme (i.e., the SRS transmission scheme defined by the 3GPP LTE Release-8 or the 3GPP LTE Release-9) may be inappropriate for the dynamic UL CC setup/configuration. Accordingly, it may be able to define a new wideband SRS transmitting procedure having a separate transmission period different from the previous wideband SRS transmission period. This separate SRS transmission period may be defined as a reporting period defined for the SRS transmission for CC configuration.

Meanwhile, it may be able to define a wideband SRS transmission scheme of an aperiodic (or event-triggered) type. For the aperiodic wideband SRS transmission, an indicator indicating an SRS transmission of an event-triggered type may be additionally included in a UL grant PDCCH. Moreover, a separate DCI (downlink control information) format for an aperiodic SRS transmission may be newly defined in addition. This aperiodic transmission scheme may be applicable in parallel with or independently from the periodic wideband SRS transmission scheme proposed by the present invention.

As mentioned in he foregoing description, an event of a configuration modification or new setup of a UL active CC set may have a connected relation with an event of a configuration modification or new setup of a DL active CC in consideration of the relationship of a paring between DL CC and UL CC. In this case, a channel measurement for configuration of activation or deactivation of a specific DL CC/UL CC pair may be determined in association with the randomly applicable DL channel measurement report mentioned in the foregoing description or in consideration of a DL channel measurement report and a UL channel measurement signal reception together.

Channel Measurement Target CC Range Setting Method

Assume that a random cell configures a plurality of DL CCs and/or a plurality of UL CCs and that random cell-specific or random UE-specific (or random UE group-specific) DL CC and/or UL CC is configured. Hence, random cell-specific or random UE-specific (or random UE group-specific) DL active CC set and/or UL active CC set can be configured. In viewpoint of a specific user equipment, the modification of the configured DL active CC set and the modification of the configured UL active CC set may be explained as a change of a configured state of DL PDSCH transmittable DL CCs and a change of a configured state of UL PUSCH transmittable UL CCs. In this case, as mentioned in the foregoing description, an event of the configuration modification or new setup of the DL active CC set and the UL active CC set may have a connected relation in a manner of being linked using a DL CC/UL CC pair as a medium.

In a carrier aggregation supporting wireless communication system, a channel measuring method for random DL CC or random UL CC may be based on various embodiments proposed by the present invention. In this case, it may be necessary to determine a prescribed CC on which a channel measurement will be performed. Generally, a random user equipment performs a channel measurement on CCs configured or assigned user-specific only but does not perform a channel measurement on CC not configured or assigned to itself. Moreover, a though a cell may be able to designate a CC, on which a channel measurement will be performed, using a carrier identifier (e.g., a carrier indication field (CIF)), there is a problem that it is unable to designate a CC, on which a channel measurement will be performed, among CCs other than the CCs configured UE-specific. In this case, for example, in case of attempting to additionally configure a different CC for a user equipment except a CC that is not configured for the corresponding user equipment, a channel measurement is not performed on the corresponding different CC, whereby CC configuration may not be correctly performed. Likewise, a cell performs a channel measurement on UE-specific active CCs for a random user equipment and may not perform a channel measurement on inactive CCs that are already configured. In this case, the cell may not be able to correctly perform the channel measurement on the CCS not configured for the specific user equipment and the inactive CCs among the configured CCs. The following proposals of the present invention relate to a method for UE DL channel measurement and report of non-configured CCs in the former case and non-configured CCs and inactive configured CCs in the latter case and a method for UL channel measurement signal transmission. In consideration of these methods, the present invention proposes a range of CC unit that becomes a target of channel measurement required for modification/new setup of DL active CC set and UL active CC set as follows.

First of all, DL CCs and/or UL CCs configured by a random cell may become a target of the channel measurement for modification of DL active CC set and UL active CC set. This may be represented as CCs configured by a cell (i.e., cell configured CCs).

Secondly, DL CCs and/or UL CCs, which are uniquely configured in viewpoint of a corresponding cell or user equipment (or UE group), among DL CCs and/or UL CCs configured by a random cell can become a target of a channel measurement for modification of DL active CC set and UL active CC set. In this case, the setup of CC is used to have a meaning that includes assignment of CC or configuration of CC. A CC set up unique to a cell may be represented as a cell-specific set (i.e., assigned or configured) CC and a CC set unique to a user equipment (or a user equipment group) may be represented as a UE-specific (or UE group-specific) set (i.e., assigned or configured) CC.

Thirdly, DL CCs and/or UL CCs in a prescribed range among DL CCs and/or UL CCs not configured by a random cell may become the target of a channel measurement for modification of DL active CC set and UL active CC set. The DL CCs in the prescribed range may be represented as a DL measurement CC set and the UL CCs in the prescribed range may be represented as a UL measurement CC set, which can be defined by random RRC parameters. And, the DL measurement CC set and/or the UL measurement CC set may be determined in accordance with UE capability or may be designated by a cell.

The above-mentioned various proposed methods of the present invention relate to a channel measuring method for modification of cell-specific or UE-specific (or UE group-specific) DL active CC set and/or UL active CC set and a range of channel measurement target CC. In the following description, detailed embodiments of the above-mentioned various proposed methods of the present invention are explained. For instance, the following embodiments of the present invention follow whether dynamic Cc activation/deactivation is applied within DL active CC set and/or UL active CC set in accordance with a frequency of applying modification of the DL active CC set and/or UL active CC set, where the dynamic CC activation or deactivation means that an awake or sleep state of a random CC is dynamically designated).

In the following description, a channel measuring method in accordance with application of dynamic CC activation/deactivation and a range of channel measurement target CC according to embodiments of the present invention are explained.

1st Embodiment

In case that a prescribed 'DL active CC set' and/or 'UL active CC set' is configured by a higher layer through semi-static RRC signaling, the 1st embodiment relates to a case that dynamic CC activation/deactivation is applied within CCs set as the corresponding prescribed DL active CC set and/or UL active CC set. In this case, the RRC signaling may include cell-specific or UE-specific (or UE group-specific) signaling. In particular, the DL active CC set and/or UL active CC set may be configured cell-specific or UE-specific (or UE group-specific). In the following description, detailed embodiments of the present invention for applying dynamic CC activation/deactivation within the above-configured DL active CC set and/or UL active CC set using L1 PDCCH control signaling or L2MAC messaging based control signaling as a medium are explained. Various embodiments mentioned in the following description may be applicable to a detailed method of a channel measuring method required for DLCC and/or UL CC setup.

Embodiment 1-1

The present embodiment 1-1 relates to a setup of a CC range for applying a channel measurement.

First of all, DL CCs, to which a DL channel measurement (e.g., the aforementioned DL channel measuring method 1, 2, 3-1 or 3-2) for dynamic CC activation/deactivation is applied, may become a subset of entire or partial DL CCs set up on the DL active CC set. In this case, for example, in case that a channel measurement on DL CC is provided for activation of the corresponding DL CC, a subset of entire or partial DL CCs remaining except the DL CCS, to which the dynamic CC activation/deactivation is not applied, in the DL active CC set may be designated as channel measurement applied DL CCs. For instance, the DL CCs, to which the dynamic CC activation/deactivation is not applied, may include DL CC carrying PDCCH for a corresponding user equipment and/or DL PCC (DL primary CC) (or DL anchor CC).

Secondly, UL CCs, to which a UL channel measurement (e.g., the aforementioned UL channel measuring method via SRS) for dynamic CC activation/deactivation is applied, may become a subset of entire or partial UL CCs set up on the UL active CC set. In this case, a subset of entire or partial UL CCs remaining except the UL CCS (e.g., UL PCC (UL primary CC), UL anchor CC, etc.), to which the dynamic CC activation/deactivation is not applied, in the UL active CC set may be designated as channel measurement applied UL CCs.

Meanwhile, as mentioned in the foregoing description, if a separate 'DL measurement CC set' or 'UL measurement CC set' is set up, it may be able to designate a channel measurement to be applied to DL CCs or UL CCs defined in the corresponding set.

Embodiment 1-2

The present embodiment 1-2 relates to a setup of a channel measurement scheme.

First of all, when dynamic CC activation/deactivation is applied, in order to determine whether to dynamically activate or deactivate a prescribed DL CC and/or UL CC, it may be able to assume a case that channel measurement information is defined as a base element (i.e., an important determination factor). In this case, it may be preferable that activation/deactivation of a corresponding CC is determined on the basis of channel information in accordance with a channel measuring method more appropriate for a dynamic setup. To this end, since L3 channel measurement is to measure long-term channel information and L2 channel measurement is to measure channel information at a specific timing point, it may be able to consider applying the channel information according to the L2 channel measurement to the dynamic CC setup. In this case, the L2 channel measurement information may include the channel measurement information on a wideband (e.g., a whole frequency band, a specific band designated to correspond to the whole frequency band, etc.) of the corresponding DL CC or UL CC. Alternatively, the L2 channel measurement information may include the channel measurement information on at least one of subbands generated from dividing a whole frequency band into an arbitrary number of the subbands for the purpose of fast channel-dependent scheduling or the channel measurement information on the entire subbands.

Secondly, when dynamic CC activation/deactivation is applied, in order to determine whether to dynamically activate or deactivate a prescribed DL CC and/or UL CC, it may be able to assume a case that channel measurement information has a limited influence. In this case, it may be able to consider applying channel information according to L3 channel measurement to the dynamic CC setup. In doing so, in viewpoint of a user equipment that receives L3 measurement parameter, when a channel of DL CCs in the range defined by Embodiment 1-1, it may be able to perform a general CRS (cell-specific reference signal) or CSI-RS (channel status information-reference signal) based intra-frequency measurement. In addition, it may be able to perform a measurement on a different carrier except a carrier served to a user equipment using a measurement gap. In this case, considering that a communication with a serving cell is not performed via a serving carrier (f1) if a user equipment performs a measurement on a different frequency (f2) while serviced on the carrier (f1), the measurement gap is a measurement scheme performed in a manner of setting a measurement gap to enable the user equipment to measure a channel on the different carrier (f2) by restricting the communication on the serving carrier (f1) in a prescribed time interval, enabling the user equipment to perform a measurement on the different frequency (f2) during the corresponding measurement gap, and then enabling the user equipment to perform the communication with a serving cell on the serving carrier (f1) if the time interval of the measurement gap expires. Accordingly, as a measurement gap is set to restrict a DL scheduling on a current serving carrier, a user equipment may be able to perform a channel measurement via CRS or CSI-RS on a different DL CC in a time interval of the corresponding measurement gap.

According to the above-described embodiment 1-2, for instance, the aforementioned DL channel measuring method 2 or the aforementioned DL channel measuring method 3-1 may be applicable as an L2 channel measuring method and the aforementioned DL channel measuring method 1 or the aforementioned DL channel measuring method 3-2 may be applicable as an L3 channel measuring method.

2nd Embodiment

The present 2nd embodiment relates to a case that dynamic CC activation/deactivation is applied among cell configured CCs. Through various embodiments in the following description, a channel measuring method required for DL CC and/or UL CC setup can be embodied.

Embodiment 2-1

The present embodiment 2-1 relates to a setup of a CC range for applying a channel measurement.

First of all, DL CCs, to which a DL channel measurement (e.g., the aforementioned DL channel measuring method 1, 2, 3-1 or 3-2) for dynamic CC activation/deactivation is applied, may become a subset of entire or partial cell configured CCs. In this case, for example, in case that a channel measurement on DL CC is provided for activation of the corresponding DL CC, a subset of entire or partial DL CCs except the DL CCS [e.g., DL CC carrying PDCCH for a corresponding user equipment and/or DL PCC (DL primary CC) (or DL anchor CC)], to which the dynamic CC activation/deactivation is not applied, among the cell configured CCs may be designated as channel measurement applied DL CCs.

Secondly, UL CCs, to which a UL channel measurement (e.g., the aforementioned UL channel measuring method via SRS) for dynamic CC activation/deactivation is applied, may become a subset of entire or partial cell configured UL CCs. In this case, a subset of entire or partial UL CCs remaining except the UL CCS (e.g., UL PCC (UL primary CC), UL anchor CC, etc.), to which the dynamic CC activation/deactivation is not applied, among the cell configured UL CCs may be designated as channel measurement applied UL CCs.

Meanwhile, as mentioned in the foregoing description, if a separate 'DL measurement CC set' or 'UL measurement CC set' is set up, it may be able to designate a channel measurement to be applied to DL CCs or UL CCs defined in the corresponding set.

Embodiment 2-2

The present embodiment 2-2 relates to a setup of a channel measurement scheme.

First of all, when dynamic CC activation/deactivation is applied, in order to determine whether to dynamically activate or deactivate a prescribed DL CC and/or UL CC, it may be able to assume a case that channel measurement information is defined as a base element (i.e., an important determination factor). In this case, it may be able to consider applying channel information according to Le channel measurement to the dynamic CC setup. In this case, the L2 channel measurement information may include the channel measurement information on a wideband (e.g., a whole frequency band, a specific band designated to correspond to the whole frequency band, etc.) of the corresponding DL CC or UL CC. Alternatively, the L2 channel measurement information may include the channel measurement information on at least one of subbands generated from dividing a whole frequency band into an arbitrary number of the subbands for the purpose of fast channel-dependent scheduling or the channel measurement information on the entire subbands.

Secondly, when dynamic CC activation/deactivation is applied, in order to determine whether to dynamically activate or deactivate a prescribed DL CC and/or UL CC, it may be able to assume a case that channel measurement information has a limited influence. In this case, it may be able to consider applying channel information according to L3 channel measurement to the dynamic CC setup. In doing so, in viewpoint of a user equipment that receives L3 measurement parameter, when a channel of DL CCs in the range defined by Embodiment 2-1, it may be able to perform a general CRS (cell-specific reference signal) or CSI-RS (channel status information-reference signal) based intra-frequency measurement. In addition, as a measurement gap is set to restrict a DL scheduling on a current serving carrier, a user equipment may be able to perform a channel measurement via CRS or CSI-RS on a different DL CC in a time interval of the corresponding measurement gap.

According to the above-described embodiment 2-2, for instance, the aforementioned DL channel measuring method 2 or the aforementioned DL channel measuring method 3-1 may be applicable as an L2 channel measuring method and the aforementioned DL channel measuring method 1 or the aforementioned DL channel measuring method 3-2 may be applicable as an L3 channel measuring method.

In the above description of the present invention, it is apparent that dynamic CC activation/deactivation may be basically construed as the meaning of including a dynamic setup scheme of DL active CC set and/or UL active CC set. For instance, if a specific CC (e.g., CC #3) among UE-specific configured CCs is dynamically activated, it may be the same operation of additionally setting the CC #3 in an active CC set, which is assigned to a user equipment, dynamically. Considering that the present invention relates to a detailed method of using a channel measurement result of a prescribed CC to activate/deactivate (e.g., add/exclude a prescribed CC to/from an active CC set) the corresponding CC, if a channel measurement result of CC #3 in order to determine whether to activate the CC # 3 in the above example [or whether to add the CC #3 to an active set], it may be identically applied to a dynamic activation/deactivation method of an active CC set modifying method. Accordingly, even if there is a difference in a detailed operation between a dynamic CC activation and active CC setup state and a dynamic CC deactivation and inactive CC setup state, it is apparent that a scheme or procedure of the measurement and report for the CC setup and modification can be identically applicable.

And, in the above description of the present invention, all items proposed in aspect of the dynamic CC activation/ deactivation, it is apparent that the dynamic DL/UL active CC set setup or the setup of the dynamic DL/UL PDCCH monitoring CC set can be identically applied as a method of setting up a CC as a measurement target in case of semi-statically setting up a DL/UL active CC set or a DL/UL monitoring CC set. Moreover, regarding a channel measurement and reporting scheme, it is apparent that the L2 or L3 measurement scheme is basically applicable and that a random one of the channel measurement and reporting scheme (e.g., the aforementioned DL channel measuring method 3-1, the aforementioned DL channel measuring method 3-2, and the aforementioned UL channel measuring method) newly proposed by the present invention is applicable as well.

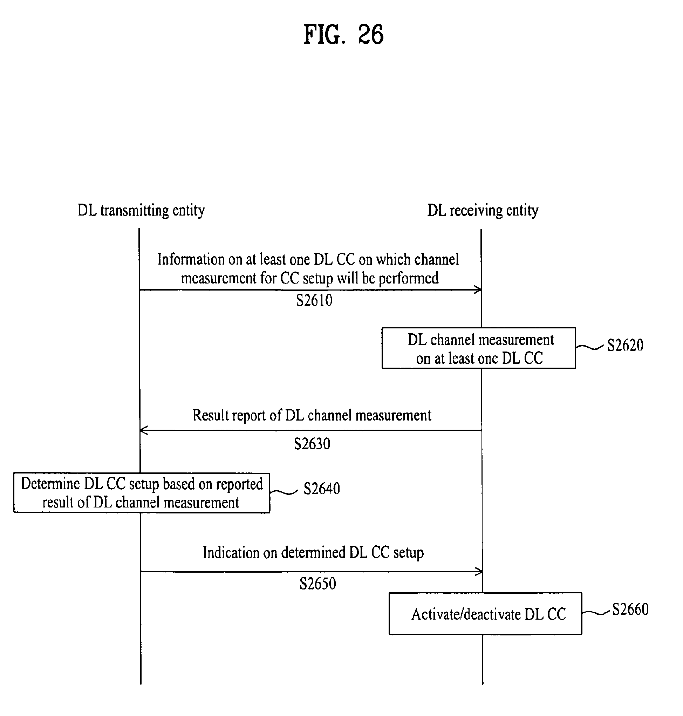

FIG. 26 is a diagram for a method of measuring a downlink channel according to one embodiment of the present invention.

In a step S2610, a DL transmitting entity (e.g., a base station) transmits information on at least one DL CC, on which a channel measurement for CC setup will be performed, to a DL receiving entity (e.g., a user equipment). The DL receiving entity may be then able to receive the information on the at least one DL CC. This information may include an information for determining a DL CC range for performing the channel measurement thereon. In this case, the at least one DL CC, on which the channel measurement for the CC setup will be performed, may correspond to all or some of DL CCs configured by a cell, all or some of DL CCs set up by the DL receiving entity, or all or some of 'DL measurement CC set'. And, in the at least one DL CC on which the channel measurement for the CC setup will be performed, DL PCC (DL primary CC) may not be included. Moreover, the at least one DL CC, on which the channel measurement will be performed, may include a component carrier that is not assigned to the DL receiving entity. In particular, according to the present invention, based on the channel measurement result of the CC that is not assigned to the DL receiving entity, the setup (e.g., activation) of the corresponding CC may be performed.

In a step S2620, the DL receiving entity may be able to perform a DL channel measurement on the at least one DL CC in accordance with the aforementioned information. In particular, the DL channel measurement may be performed by the conventional L2 channel measurement scheme and/or the conventional L3 channel measurement scheme. Alternatively, the DL channel measurement in the step S2620 may be performed by the L2 channel measurement of the periodic reporting scheme in accordance with the reporting period defined for the L2 channel measurement for a CC setup or the L2 channel measurement of the aperiodic reporting scheme. The channel information determined by the L2 channel measurement may include WB channel measurement information on the CC as a channel measurement target or subband channel measurement information. Alternatively, the DL channel measurement in the step S2620 may be performed by the L3 channel measurement of the periodic reporting scheme in accordance with the reporting period defined for the L3 channel measurement for a CC setup or the L3 channel measurement of the aperiodic reporting scheme.

In a step S2630, the result of the DL channel measurement determined in the step S2620 may be reported to the DL transmitting entity from the DL receiving entity. In a step S2640, the DL transmitting entity may be able to determine a DL CC setup (e.g., activation/deactivation) based on the DL channel measurement result reported in the step S2630. In a step S2650, the DL transmitting entity may be able to transmit an indication of the DL CC setup determined in the step S2640 to the DL receiving entity. In a step S2660, the DL receiving entity may be able to perform the activation or deactivation of the DL CC based on the indication received in the step S2650.

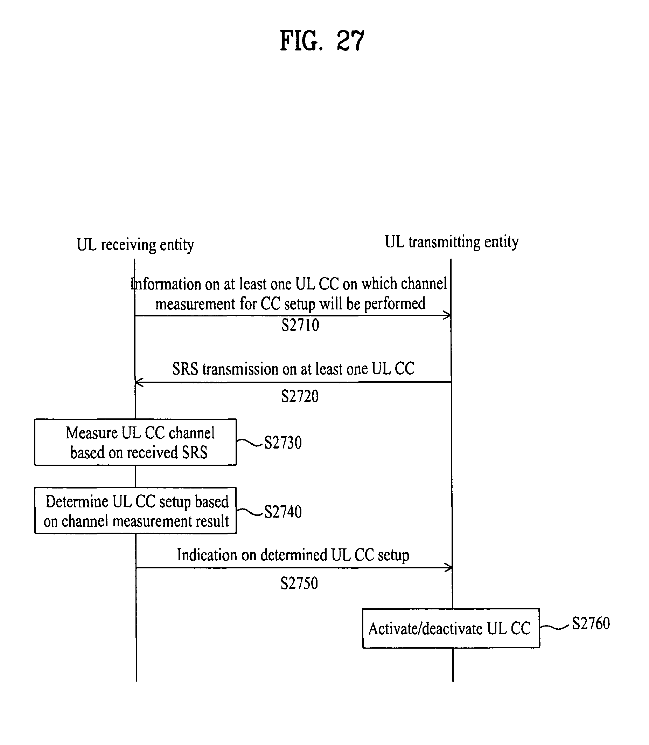

FIG. 27 is a diagram for a method of measuring an uplink channel according to one embodiment of the present invention.

In a step S2710, a UL receiving entity (e.g., a base station) transmits information on at least one UL CC, on which a channel measurement for CC setup will be performed, to a UL transmitting entity (e.g., a user equipment). The UL transmitting entity may be then able to receive the information on the at least one UL CC. This information may include an information for determining a UL CC range for performing the channel measurement thereon. In this case, the at least one UL CC, on which the channel measurement for the CC setup will be performed, may correspond to all or some of UL CCs configured by a cell, all or some of UL CCs set up by the UL transmitting entity, or all or some of 'UL measurement CC set'. And, in the at least one UL CC on which the channel measurement for the CC setup will be performed, UL PCC (UL primary CC) may not be included. Moreover, the at least one UL CC, on which the channel measurement will be performed, may include a component carrier that is not assigned to the UL transmitting entity. In particular, according to the present invention, based on the channel measurement result of the CC that is not assigned to the UL transmitting entity, the setup (e.g., activation) of the corresponding CC may be performed.

In a step S2720, the UL transmitting entity may be able to transmit SRS for at least one UL CC in accordance with the above information. This UL CC SRS transmission may be performed by an SRS transmission of a periodic transmission scheme in accordance with a reporting period defined for the SRS transmission for the CC setup or by an SRS transmission of the aperiodic transmission scheme. Moreover, the SRS may be transmitted as WB SRS on UL CC that becomes a channel measurement target for the CC setup.

In a step S2730, the UL receiving entity may be able to perform a channel measurement on the UL CC based on the SRS received in the step S2720. In a step S2740 a UL CC setup (e.g., activation/deactivation) may be determined based on the UL CC channel measurement result. In a step S2750, the UL receiving entity may be able to transmit an indication of the UL CC setup determined in the step S2740 to the UL transmitting entity. In a step S2760, the UL transmitting entity may be able to perform the activation or deactivation of the UL CC based on the indication received in the step S2750.

The DL/UL CC channel measuring methods for the CC setup according to the present invention described with reference to FIG. 26 and FIG. 27 relate to the representative methods applicable to the aforementioned various embodiments of the present invention for example, by which the scope of the present invention may be non-limited. In particular, when the methods described with reference to FIG. 26 and FIG. 27 are applied, it may be able to perform the DL/UL CC channel measurement for the CC setup by the methods proposed by the present invention.

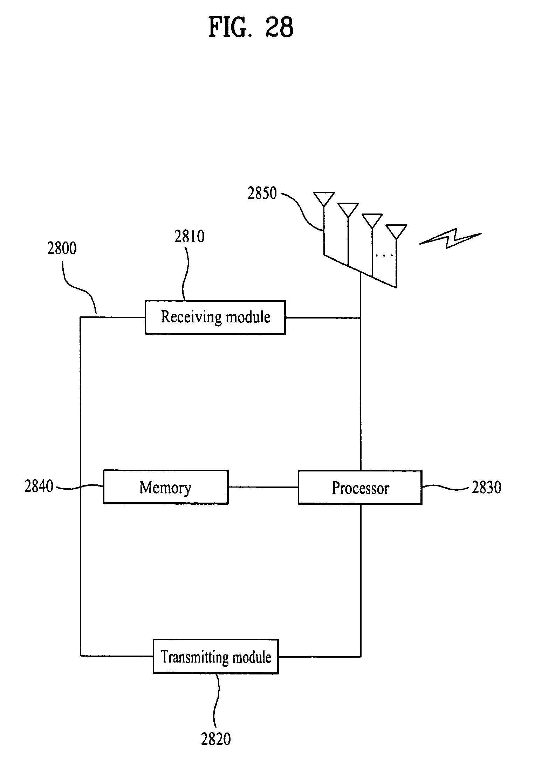

FIG. 28 is a diagram for a configuration of a user equipment device or a base station device according to a preferred embodiment of the present invention. In the following description, the same references will be used for the user equipment device or the base station device, which may not mean that each of the devices has the same configuration. In particular, the following description separately relates to a configuration of the user equipment device and a configuration of the base station device.

Referring to FIG. 28, a user equipment device 2800 according to the present invention may include a receiving module 2810, a transmitting module 2820, a processor 2830, a memory 2840 and a plurality of antennas 2850. In this case, a plurality of the antennas 2850 may mean a user equipment device that supports MIMO transmission and reception. The receiving module 2801 may be able to receive various signals, data and informations in DL from a base station. The transmitting module 2820 may be able to transmit various signals, data and informations in UL to the base station. And, the processor 2830 may be able to control overall operations of the user equipment device 2800.

A user equipment device according to one embodiment of the present invention may be configured to provide DL channel measurement information for a CC setup in a multi-carrier supporting wireless communication system. The processor 2830 of the user equipment device may have the following configuration. First of all, the processor 2830 receives information on at least one DL CC, on which a channel measurement for a CC setup will be performed, from the base station via the receiving module 2810, performs a DL channel measurement on the at least one DL CC, and then reports a result of the DL channel measurement to the base station via the transmitting module 2820. In this case, the at least one DL CC, on which the channel measurement will be performed, may include a CC that is not assigned to the corresponding user equipment.

A user equipment device according to another embodiment of the present invention may be configured to transmit a sounding reference signal (SRS) for a CC setup in a multi-carrier supporting wireless communication system. The processor 2830 of the user equipment device may have the following configuration. First of all, the processor 2830 receives information on at least one UL CC, on which a channel measurement for a CC setup will be performed, from the base station via the receiving module 2810 and then transmits the SRS on the corresponding at least one UL CC to the base station via the transmitting module 2820. In this case, the at least one UL CC, on which the channel measurement will be performed, may include a CC that is not assigned to the corresponding user equipment.

The processor of the user equipment device performs a function of operating information received by the user equipment device, information to transmit externally and the like. The memory 2840 of the user equipment device may be able to store the operated information and the like for prescribed duration and may be substituted with such a component as a buffer (not shown in the drawing) and the like.

Referring to FIG. 28, a base station device 2800 according to the present invention may include a receiving module 2810, a transmitting module 2820, a processor 2830, a memory 2840 and a plurality of antennas 2850. In this case, a plurality of the antennas 2850 may mean a base station device that supports MIMO transmission and reception. The receiving module 2801 may be able to receive various signals, data and informations in DL from a user equipment. The transmitting module 2820 may be able to transmit various signals, data and informations in UL to the user equipment. And, the processor 2830 may be able to control overall operations of the base station device 2800.

A base station device according to one embodiment of the present invention may be configured to receive DL channel measurement information for a CC setup in a multi-carrier supporting wireless communication system. The processor 2830 of the base station device may have the following configuration. First of all, the processor 2830 transmits information on at least one DL CC, on which a channel measurement for a CC setup will be performed, to the user equipment via the transmitting module 2820 and then receives a result of the DL channel measurement on the at least one DL CC from the user equipment via the receiving module 2810. In this case, the at least one DL CC, on which the channel measurement will be performed, may include a CC that is not assigned to the corresponding user equipment.

A base station device according to another embodiment of the present invention may be configured to receive a sounding reference signal (SRS) for a CC setup in a multi-carrier supporting wireless communication system. The processor 2830 of the base station device may have the following configuration. First of all, the processor 2830 transmits information on at least one UL CC, on which a channel measurement for a CC setup will be performed, to the user equipment via the transmitting module 2820 and then receives the SRS on the corresponding at least one UL CC from the user equipment via the receiving module 2810. In this case, the at least one UL CC, on which the channel measurement will be performed, may include a CC that is not assigned to the corresponding base station.

The processor of the base station device performs a function of operating information received by the base station device, information to transmit externally and the like. The memory 2840 of the base station device may be able to store the operated information and the like for prescribed duration and may be substituted with such a component as a buffer (not shown in the drawing) and the like.

Detailed configurations of the base station device or the user equipment device (particularly, the processor of the corresponding device) may be implemented to identically apply to the items (e.g., various channel measuring methods proposed by the present invention, various channel measurement target CC ranges proposed by the present invention, etc.) described in the various embodiments of the present invention.

In the description with reference to FIG. 28, the description of the base station device may identically apply to a relay node as a DL transmitting entity or a UL receiving entity, while the description of the user equipment device may identically apply to a relay node as a DL receiving entity or a UL transmitting entity.

Embodiments of the present invention can be implemented using various means. For instance, embodiments of the present invention can be implemented using hardware, firmware, software and/or any combinations thereof.

In the implementation by hardware, a method according to each embodiment of the present invention can be implemented by at least one selected from the group consisting of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, a method according to each embodiment of the present invention can be implemented by modules, procedures, and/or functions for performing the above-explained functions or operations. Software code is saved in a memory unit and is then drivable by a processor. The memory unit is provided within or outside the processor to exchange data with the processor through the various means known to the public.

As mentioned in the foregoing description, the detailed descriptions for the preferred embodiments of the present invention are provided to be implemented by those skilled in the art. While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents. For instance, the respective configurations disclosed in the aforesaid embodiments of the present invention can be used by those skilled in the art in a manner of being combined with one another. Therefore, the present invention is non-limited by the embodiments disclosed herein but intends to give a broadest scope matching the principles and new features disclosed herein.

While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents. And, it is apparently understandable that an embodiment is configured by combining claims failing to have relation of explicit citation in the appended claims together or can be included as new claims by amendment after filing an application.

**INDUSTRIAL APPLICABILITY**

Accordingly, the embodiments of the present invention mentioned in the foregoing description may be applicable to various kinds of mobile communication systems.

**Claims**

1. A method of providing downlink channel measurement information for a component carrier setup by a downlink receiving entity in a multi-carrier supporting wireless communication system, comprising the steps of:

   receiving, from a downlink transmitting entity, information on at least one downlink component carrier on which a channel measurement for the component carrier setup will be performed;
   performing a downlink channel measurement on the at least one downlink component carrier; and
   reporting a result of the downlink channel measurement to the downlink transmitting entity,

wherein the at least one downlink component carrier on which the channel measurement will be performed comprises a component carrier not assigned to the downlink receiving entity.

2. The method of claim 1, wherein the at least one downlink component carrier on which the channel measurement for the component carrier setup will be performed comprises,
all or some of downlink component carriers configured by a cell,
all or some of downlink component carriers set up for the downlink receiving entity, or
all or some of a downlink measurement component carrier set.

3. The method of claim 1, wherein the at least one downlink component carrier on which the channel measurement for the component carrier setup will be performed does not comprise a downlink primary component carrier (CC).

4. The method of claim 1, wherein the downlink channel measurement comprises at least one of a periodic reporting type 2nd layer (L2) channel measurement according to a reporting period defined for a L2 channel measurement for the component carrier setup and an aperiodic reporting type L2 channel measurement and comprises at least one of a wideband channel measurement and a subband channel measurement on the component carrier as a channel measurement target for the component carrier setup.

5. The method of claim 1, wherein the downlink channel measurement comprises at least one of a periodic reporting type 3rd layer (L3) channel measurement according to a reporting period defined for a L3 channel measurement for the component carrier setup and an aperiodic reporting type L3 channel measurement.

6. The method of claim 1, further comprising the steps of:

receiving an indication of a setup for a downlink component carrier determined based on the reported result of the downlink channel measurement from the downlink transmitting entity; and
performing activation or deactivation of the downlink component carrier based on the indication.

7. A method of transmitting a sounding reference signal for a component carrier setup by an uplink transmitting entity in a multi-carrier supporting wireless communication system, comprising the steps of:

receiving, from an uplink receiving entity, information on at least one uplink component carrier on which a channel measurement for the component carrier setup will be performed; and
transmitting the sounding reference signal on the at least one uplink component carrier to the uplink receiving entity,
wherein the at least one uplink component carrier on which the channel measurement will be performed comprises a component carrier not assigned to the uplink transmitting entity.

8. The method of claim 7, wherein the at least one uplink component carrier on which the channel measurement for the component carrier setup will be performed comprises
all or some of uplink component carriers configured by a cell,
all or some of uplink component carriers set up for the uplink transmitting entity, or
all or some of an uplink measurement component carrier set.

9. The method of claim 7, wherein the at least one uplink component carrier on which the channel measurement for the component carrier setup will be performed does not comprise an uplink primary component carrier (CC).

10. The method of claim 7, wherein the sounding reference signal is transmitted by at least one of a periodic transmission scheme defined for sounding reference signal transmission for the component carrier setup and an aperiodic transmission scheme and is transmitted as a wideband sounding reference signal on the component carrier as a channel measurement target for the component carrier setup.

11. The method of claim 7, further comprising the steps of:

receiving an indication of a setup for an uplink component carrier determined based on the transmitted sounding reference signal from the uplink receiving entity; and
performing activation or deactivation of the uplink component carrier based on the indication.

**12.** A method of receiving downlink channel measurement information for a component carrier setup by a downlink transmitting entity in a multi-carrier supporting wireless communication system, comprising the steps of:

transmitting, to a downlink receiving entity, information on at least one downlink component carrier on which a channel measurement for the component carrier setup will be performed; and
receiving a report of a result of a downlink channel measurement on the at least one downlink component carrier from the downlink receiving entity,
wherein the at least one downlink component carrier on which the channel measurement will be performed comprises a component carrier not assigned to the downlink receiving entity.

**13.** A method of receiving a sounding reference signal for a component carrier setup by an uplink receiving entity in a multi-carrier supporting wireless communication system, comprising the steps of:

transmitting, to an uplink transmitting entity, information on at least one uplink component carrier, on which a channel measurement for the component carrier setup will be performed; and
receiving the sounding reference signal on the at least one uplink component carrier from the uplink transmitting entity,
wherein the at least one uplink component carrier on which the channel measurement will be performed comprises a component carrier not assigned to the uplink transmitting entity.

**14.** A user equipment, which provides downlink channel measurement information for a component carrier setup in a multi-carrier supporting wireless communication system, comprising:

a receiving module receiving a downlink signal on at least one downlink component carrier from a base station;
a transmitting module transmitting an uplink signal on at least one uplink component carrier to the base station; and
a processor controlling the user equipment including the receiving module and the transmitting module, the processor configured to receive, from the base station via the receiving module, information on at least one downlink component carrier on which a channel measurement for the component carrier setup will be performed, the processor configured to perform a downlink channel measurement on the at least one downlink component carrier, the processor configured to report a result of the downlink channel measurement to the base station via the transmitting module,
wherein the at least one downlink component carrier on which the channel measurement will be performed comprises a component carrier not assigned to the user equipment.

**15.** A user equipment, which transmits a sounding reference signal for a component carrier setup in a multi-carrier supporting wireless communication system, comprising the steps of:

a receiving module receiving a downlink signal on at least one downlink component carrier from a base station;
a transmitting module transmitting an uplink signal on at least one uplink component carrier to the base station; and
a processor controlling the user equipment including the receiving module and the transmitting module, the processor configured to receive, from the base station via the receiving module, information on at least one uplink component carrier on which a channel measurement for the component carrier setup will be performed, the processor configured to transmit the sounding reference signal on the at least one uplink component carrier to the base station via the transmitting module,
wherein the at least one uplink component carrier on which the channel measurement will be performed comprises a component carrier not assigned to the user equipment.

**16.** A base station, which receives downlink channel measurement information for a component carrier setup in a multi-carrier supporting wireless communication system, comprising:

a receiving module receiving an uplink signal on at least one uplink component carrier from a user equipment;
a transmitting module transmitting a downlink signal on at least one downlink component carrier to the user equipment; and
a processor controlling the base station including the receiving module and the transmitting module, the processor configured to transmit, to the user equipment via the transmitting module, information on at least one downlink component carrier, on which a channel measurement for the component carrier setup will be performed, the processor configured to receive a report of a result of a downlink channel measurement on the at least one downlink component carrier from the user equipment,

wherein the at least one downlink component carrier on which the channel measurement will be performed comprises a component carrier not assigned to the user equipment.

**17.** A base station, which receives a sounding reference signal for a component carrier setup in a multi-carrier supporting wireless communication system, comprising:

a receiving module receiving an uplink signal on at least one uplink component carrier from a user equipment;

a transmitting module transmitting a downlink signal on at least one downlink component carrier to the user equipment; and

a processor controlling the base station including the receiving module and the transmitting module, the processor configured to transmit, to the user equipment via the transmitting module, information on at least one uplink component carrier, on which a channel measurement for the component carrier setup will be performed, the processor configured to receive the sounding reference signal on the at least one uplink component carrier from the user equipment via the receiving module,

wherein the at least one uplink component carrier on which the channel measurement will be performed comprises a component carrier not assigned to the user equipment.

# FIG. 1

```
                          Radio frame
        |←───────────────────────────────────────────────→|
        |  Slot  |
        |←──────→|
        |────────┬────────┬────────┬──────────┬────────┬────────|
        |  # 0   |  # 1   |  # 2   |   · · ·   |  # 18  |  # 19  |
        |────────┴────────┴────────┴──────────┴────────┴────────|
        |←────────────────→|
              Subframe
```

# FIG. 2

One DL slot

7 OFDM symbols

Resource block
12×7 Resource elements

Resource elements

$N^{DL} \times 12$ subcarriers

12 subcarriers

# FIG. 3

# FIG. 4

# FIG. 5

```
┌──────────┐  ┌──────────┐  ┌──────────┐   ┌──────────┐
│   MAC    │  │   MAC    │  │   MAC    │   │   MAC    │
└──────────┘  └──────────┘  └──────────┘   └──────────┘
                       ...
                   Dynamic/                            Transmitter
                   Static mapping
┌──────────┐  ┌──────────┐  ┌──────────┐   ┌──────────┐
│  PHY 0   │  │  PHY 1   │  │  PHY n-2 │   │  PHY n-1 │
│(carrier 0)│ │(carrier 1)│ │(carrier n-2)│ │(carrier n-1)│
└──────────┘  └──────────┘  └──────────┘   └──────────┘


┌──────────┐  ┌──────────┐  ┌──────────┐   ┌──────────┐
│  PHY 0   │  │  PHY 1   │  │  PHY n-2 │   │  PHY n-1 │
│(carrier 0)│ │(carrier 1)│ │(carrier n-2)│ │(carrier n-1)│
└──────────┘  └──────────┘  └──────────┘   └──────────┘
                       ...
                   Dynamic/                            Receiver
                   Static mapping
┌──────────┐  ┌──────────┐  ┌──────────┐   ┌──────────┐
│   MAC    │  │   MAC    │  │   MAC    │   │   MAC    │
└──────────┘  └──────────┘  └──────────┘   └──────────┘
```

```
┌──────────────────────────────────────────────────────┐
│                        MAC                             │
└──────────────────────────────────────────────────────┘
                       ...
                   Dynamic/                            Transmitter
                   Static mapping
┌──────────┐  ┌──────────┐  ┌──────────┐   ┌──────────┐
│  PHY 0   │  │  PHY 1   │  │  PHY n-2 │   │  PHY n-1 │
│(RF carrier 0)│ │(RF carrier 1)│ │(RF carrier n-2)│ │(RF carrier n-1)│
└──────────┘  └──────────┘  └──────────┘   └──────────┘


┌──────────┐  ┌──────────┐  ┌──────────┐   ┌──────────┐
│  PHY 0   │  │  PHY 1   │  │  PHY n-2 │   │  PHY n-1 │
│(RF carrier 0)│ │(RF carrier 1)│ │(RF carrier n-2)│ │(RF carrier n-1)│
└──────────┘  └──────────┘  └──────────┘   └──────────┘
                       ...
                   Dynamic/                            Receiver
                   Static de-mapping
┌──────────────────────────────────────────────────────┐
│                        MAC                             │
└──────────────────────────────────────────────────────┘
```

# FIG. 6

DL  $\boxed{\text{DL CC}_0}$   $\boxed{\text{DL CC}_1}$   $\cdots$   $\boxed{\text{DL CC}_{N-2}}$   $\boxed{\text{DL CC}_{N-1}}$

UL   $\boxed{\text{UL CC}_0}$   $\boxed{\text{UL CC}_1}$   $\cdots$   $\boxed{\text{UL CC}_{M-1}}$

# FIG. 7

UE-specific
(or RN-specific)
DL/UL CC connection setup

BS DL/UL CC
configuration

DL CC #a    DL CC #b

UL CC #i    UL CC #j

UE-specific
(or RN-specific)
DL/UL CC connection setup

Basic BS-specific
DL/UL CC connection setup

# FIG. 8

* CP : Cyclic Prefix
* M > N

Subcarrier mapping

$\{X_0, X_1, \cdots, X_{N-1}\}$
One block

Serial → Parallel
801

N-point DFT
802

$\{X_k\}$

M-1

Subcarrier

0

803

$\{\widetilde{X}_l\}$

M-point IDFT
804

$\{\widetilde{X}_m\}$

Parallel → Serial /CP attachment
805

SC-FDMA : ⬜ + ▨

OFDMA : ⬜

# FIG. 9

(a)

(b)

(c)

# FIG. 10

(a)

(b)

# FIG. 11

OFDM symbol (N samples) → CP attachment (N+G samples) → Ant 0

OFDM symbol (N samples) → Cyclic delay (d1) → CP attachment (N+G samples) → Ant 1

⋮

OFDM symbol (N samples) → Cyclic delay (dM) → CP attachment (N+G samples) → Ant M

(a)

OFDM symbol (N subcarriers) → IFFT → CP attachment (N+G samples) → Ant 0

Phase sequence 1 ⊗ → IFFT → CP attachment (N+G samples) → Ant 1

⋮

Phase sequence M ⊗ → IFFT → CP attachment (N+G samples) → Ant M

(b)

# FIG. 12

Transmitter       MIMO channel       Receiver

$x_1$

Precoding matrix $W = P_l$

$x_{M_t}$

$z_1$

$z_{N_t}$

$r_1$

$r_{N_r}$

Precoding matrix $W = P_l$

$\hat{x}_1$

$\hat{x}_{M_t}$

Feedback codeword index $l \in \{1, \cdots L\}$

# FIG. 13

$n_{PRB} = N_{RB}^{UL} - 1$

| CQI | CQI |
|---|---|
| CQI+A/N | A/N |
| | A/N |
| | |
| DATA | |
| | |

$\bullet$

$\bullet$

$\bullet$

| | |
|---|---|
| DATA | |
| | |
| A/N | |
| A/N | CQI+A/N |
| CQI | CQI |

$n_{PRB} = 0$

One subframe

# FIG. 14

EP 2 518 919 A2

# FIG. 15

# FIG. 16

( a )

Sequence 1

Sequence 2

( b )

Sequence 1

Sequence 2

# FIG. 17

SR ———————→ SR resource

ACK/NACK signal ————→

ACK/NACK resource

Freq

Time

# FIG. 18

(a)

(b)

# FIG. 19

Slot 0

Slot 1

time

▨ CQI RS     ▩ CQI RS modulated by     ☐ CQI Data
ACK/NACK QAM symbol

# FIG. 20

Transmitter

Data buffer

$W_l$

H

Receiver

Codebook
$\{W_0, W_1, \cdots, W_{L-1}\}$

Codebook
$\{W_0, W_1, \cdots, W_{L-1}\}$

Selection

CQI calculation

$PMI \in \{0, 1, \cdots, L-1\}$

$PM \in \{0, 1, \cdots, R\}$

$CQI_1, CQI_2$

EP 2 518 919 A2

# FIG. 21

Whole bandwidth(whole BW)

$N_{RB}^{DL} [RB]$

K [RB]

$N_{RB}^{DL} - K \lfloor N_{RB}^{DL}/K \rfloor [RB]$

| CQI subband 1 | CQI subband 2 | CQI subband 3 | CQI subband 4 | ... | CQI subband N-1 | CQI subband N |

$N_J [CQIsubband]$

| Partial BW 1 $P_{BW1}$ | Partial BW 2 $P_{BW2}$ | ... | Partial BW J $P_{BWJ}$ |

L-bit label indicating best-1

$L = \lceil \log_2 N_j \rceil$

Best/1

Best/1

Best/1

PUCCH Part1

PUCCH Part2

...

PUCCH PartJ

$N_{subframe}^{PartBW}$

$N_{subframe}^{PartBW}$

$N_{subframe}^{PartBW}$

$N_{subframe}^{FulBW}$

# FIG. 22

FIG. 23

# FIG. 24

EP 2 518 919 A2

# FIG. 25

EP 2 518 919 A2

Subframe

| 0 | 1 | 2 | 3 | 4 | 5 | 6 | 7 | 8 | 9 | 10 | 11 | 12 | 13 | 14 | 15 | 16 | 17 | 18 | 19 |

RI  WB          BP0       BP1      RI  WB

Offset

|←————— 1 period —————→|←————— 1 period —————→|←————— 1 period —————→|

(=5 subframe)  (=5 subframe)  (=5 subframe)

# FIG. 26

DL transmitting entity                                    DL receiving entity

Information on at least one DL CC on which channel
measurement for CC setup will be performed
S2610

DL channel measurement
on at least one DL CC          S2620

Result report of DL channel measurement
S2630

Determine DL CC setup based on reported
result of DL channel measurement          S2640

Indication on determined DL CC setup
S2650

Activate/deactivate DL CC          S2660

# FIG. 27

UL receiving entity                              UL transmitting entity

Information on at least one UL CC on which channel
measurement for CC setup will be performed
S2710

SRS transmission on at least one UL CC
S2720

| Measure UL CC channel based on received SRS | S2730 |

| Determine UL CC setup based on channel measurement result | S2740 |

Indication on determined UL CC setup
S2750

| Activate/deactivate UL CC | S2760 |

# FIG. 28